# EUROPÄISCHE PATENTSCHRIFT

(11) **EP 2 031 341 B1**
(45) Veröffentlichungstag und Bekanntmachung des Hinweises auf die Patenterteilung: **01.02.2012**
(21) Anmeldenummer: 08014190.6
(22) Anmeldetag: 08.08.2008
(51) Int. Cl.: F41H 7/04, B62D 33/063

(54) **Lastkraftwagen mit einem gepanzerten Fahrerhaus spezieller Bauart**
Lorry with a specially constructed reinforced driver cab
Camion avec une cabine de conducteur blindée en construction spéciale

(30) Priorität: 31.08.2007 DE 102007041276
(43) Veröffentlichungstag der Anmeldung: 04.03.2009
(73) Patentinhaber: MAN Nutzfahrzeuge Österreich AG, 4400 Steyr (AT)
(72) Erfinder: Hinze, Peter, 85250 Altomünster (DE); Ribo, Franz, 1200 Wien (AT); Wimmer, Robert, Ing., 4407 Dietach (AT)

(56) Entgegenhaltungen:
- EP-A- 1 086 884
- EP-A- 1 637 438
- EP-A- 1 640 251
- DE-U1-202006 003 506
- GB-A- 2 166 094

## Beschreibung

Die Erfindung betrifft Lastkraftwagen, insbesondere solche für militärische Einsatzzwecke, mit einem Fahrgestell und einem auf dessen Rahmen kippbar angeordneten Fahrerhaus, das an bestimmten Stellen durch aufgesetzte Panzerplatten geschützt ist.

Bei Lastkraftwagen für spezielle Einsatzwecke, auch solche militärischer Art, kommen regelmäßig speziell an den vorgesehenen Einsatz angepasste Fahrerhäuser und dahinter angeordnete Aggregateträger zum Einsatz. Siehe hierzu beispielsweise das aus der EP 1637438 A2 bekannte Fahrzeug mit seinem speziellen Low-Entry-Fahrerhaus und dem dahinter am Fahrgestell angeordneten Aggregateträger, der hier auch noch die Funktion der hinteren Fahrerhauslagerung übernimmt. Ferner ist aus der gattungsgemäßen EP 1640251 A1 ein Militär-Lastkraftwagen bekannt, bei dem hinter dem Fahrerhaus, beabstandet von diesem auf einem speziell gestalteten Aufbaurahmen ein verkleidetes Aggregategestell angeordnet ist, das wenigstens ein Kühlaggregat aufnimmt. In ähnlicher Weise sind bei dem aus der AT 410308 B bekannten Lastkraftwagen hinter dessen Fahrerhaus eine Anzahl von Fahrzeugaggregaten und -teilen in einem Traggestell zu einer kompakten Baugruppe zusammengefasst. Bei Lastkraftwagen für militärische Einsatzzwecke ist in der Regel auch eine Panzerung des Fahrerhauses zum Schutz von dessen Insassen gegen Beschuss vorgesehen. Diese Panzerung besteht aus außen oder innen an den Fahrerhauswänden aufgesetzten Panzerplatten. Allen vorstehend zitierten bekannten Fahrzeugen ist gemeinsam, dass das Fahrerhaus kippbar ist, um bei Reparatur- oder Wartungsarbeiten an das teils darunter, teils unter dem Aggregateträger angeordnete Antriebsaggregat, bestehend aus Motor, Kupplung und Gangwechsel- oder Automatikgetriebe, heranzukommen. Demgegenüber bildet der jeweils bekannte Aggregateträger mit den von ihm getragenen Fahrzeugkomponenten eine in sich geschlossene, vom Fahrerhaus unabhängige Baugruppe, die fest am Rahmen angeordnet ist und keine Verbindung zum Fahrerhaus hat.

Es ist demgegenüber Aufgabe der Erfindung, einen Lastkraftwagen im Bereich seines Fahrerhauses und der dahinter angeordneten Fahrzeugaggregate, weiteren Fahrzeugkomponenten und Zubehör so zu gestalten, dass diese Platz sparend und geschützt unterbringbar sind, aber auch eine Panzerung des Fahrerhauses gegen Beschuss von hinten zweckmäßig anbringbar ist.

Diese Aufgabe ist erfindungsgemäß durch einen Lastkraftwagen mit einem Fahrerhaus mit den im Anspruch 1 angegebenen Merkmalen gelöst.

Vorteilhafte Ausgestaltungen des erfindungsgemäßen Lastkraftwagens sind in den Unteransprüchen gekennzeichnet.

Der erfindungsgemäße Lastkraftwagen zeichnet sich durch ein spezielles zweiteiliges Fahrerhaus aus, das aus einem Frontmodul und einem Heckmodul zusammengesetzt ist. Das Frontmodul bildet dabei eine Kabine für Fahrer- und Beifahrer, wohingegen das unmittelbar dahinter angeordnete Heckmodul einen haubenartigen Schutz- und Aufnahmeraum für das Antriebsaggregat sowie weitere Fahrzeugteile und Zubehör wie Kühler, Lüfter, Luftansaugrohr, Luftansaugkasten und Luftfilter, Batteriekasten, Druckluft- und sonstige Betriebsstoffbehälter, etc. bildet. Das Heckmodul ist dabei am Fahrzeugmodul in spezieller Art und Weise lösbar befestigt und wird auch vom Frontmodul getragen. Außerdem ist die rückwärtige Panzerung bei der Erfindung nicht wie an sich üblich hinten am Fahrerhaus vorgesehen, sondern durch zwischen dessen Frontmodul und Heckmodul eingebaute Panzerplatten realisiert. Diese Anordnung der Panzerplatten ist erst durch die erfindungsgemäße Aufteilung des Fahrerhauses in Frontmodul und Heckmodul möglich geworden. Diese Aufteilung des Fahrerhauses wiederum ermöglicht eine günstige Befestigung der Panzerplatten im Bereich der Frontmodul-Rückwand. Mit dem am Frontmodul angebauten Heckmodul ist einerseits ein hinreichender Schutz für die in seinem Bereich abgedeckten bzw. untergebrachten Fahrzeugkomponenten und Zubehör in kompakter Anordnung derselben sichergestellt. Andererseits baut das Heckmodul bei Beschuss des Fahrzeuges von hinten zumindest schon einen Teil der Energie ankommender Geschosse ab, die noch vorhandene Energie wird dann ggf. bei Aufprall der Geschosse an den rückseitig am Frontmodul angeordneten Panzerplatten abgebaut.

Nachfolgend ist der erfindungsgemäße Lastkraftwagen anhand eines Ausführungsbeispiels, bei dem es sich um einen Militär-Lastkraftwagen handelt, noch näher erläutert. In der Zeichnung zeigen:
- Fig. 1: von einem Militärlastkraftwagen das erfindungsgemäß zweimodulige Fahrerhaus in Rohform ohne An- und Einbauteile mit in perspektivischer Explosionsdarstellung gezeigtem Fahrerhaus-Frontmodul und Fahrerhaus-Heckmodul,

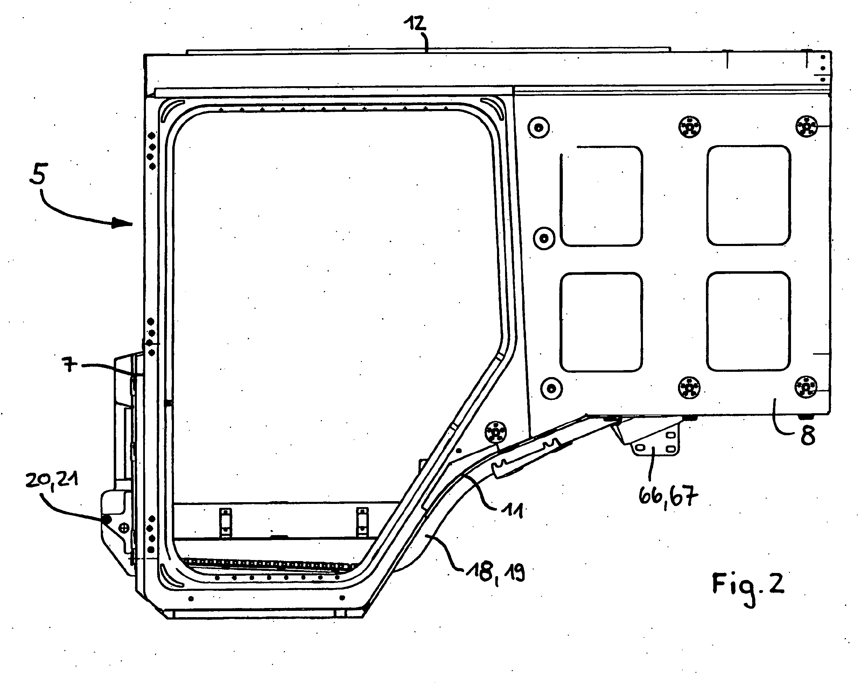

- Fig. 2: das Fahrerhaus-Frontmodul aus Fig. 1 in Seitenansicht von links,
- Fig. 3: das Fahrerhaus-Frontmodul aus Fig. 1 in Draufsicht,
- Fig. 4: das Fahrerhaus-Frontmodul aus Fig. 1 in Ansicht von hinten,
- Fig. 5: das Fahrerhaus-Frontmodul aus Fig. 1 in Perspektivansicht von hinten rechts oben,
- Fig. 6: das Fahrerhaus-Frontmodul aus Fig. 1 in Perspektivansicht von links vorne oben,

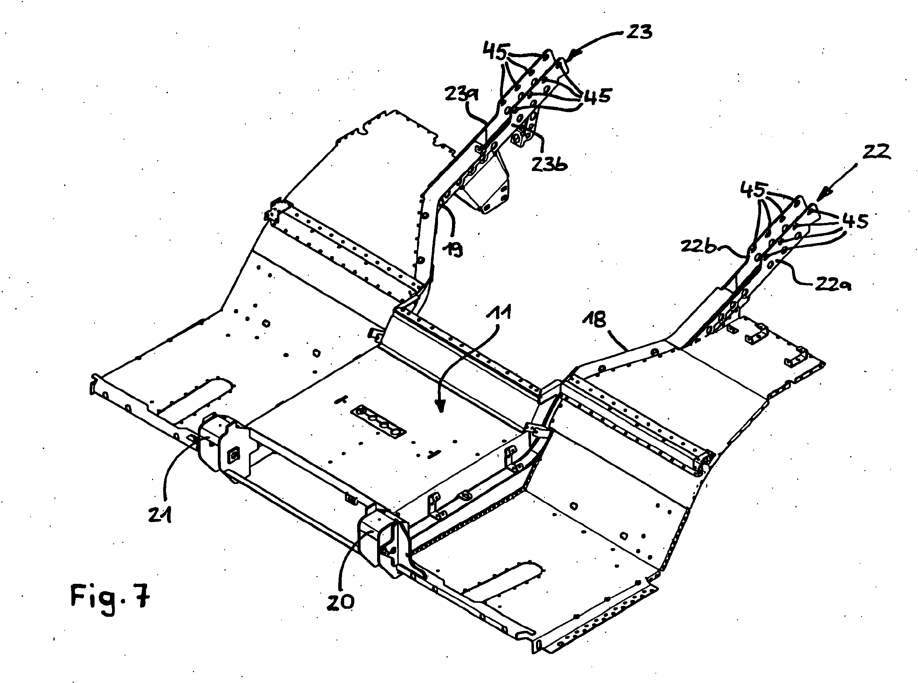

- Fig. 7: die Bodengruppe des Fahrerhaus-Frontmoduls aus Fig. 1 in Perspektivansicht von links vorne oben,

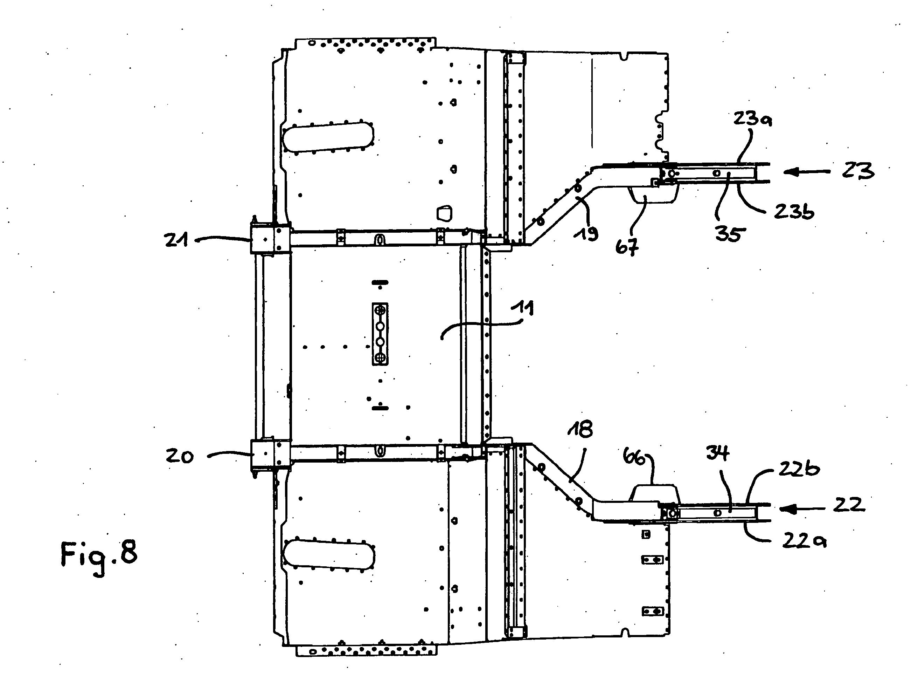

- Fig. 8: die Bodengruppe des Fahrerhaus-Frontmoduls aus Fig. 1 in Draufsicht,

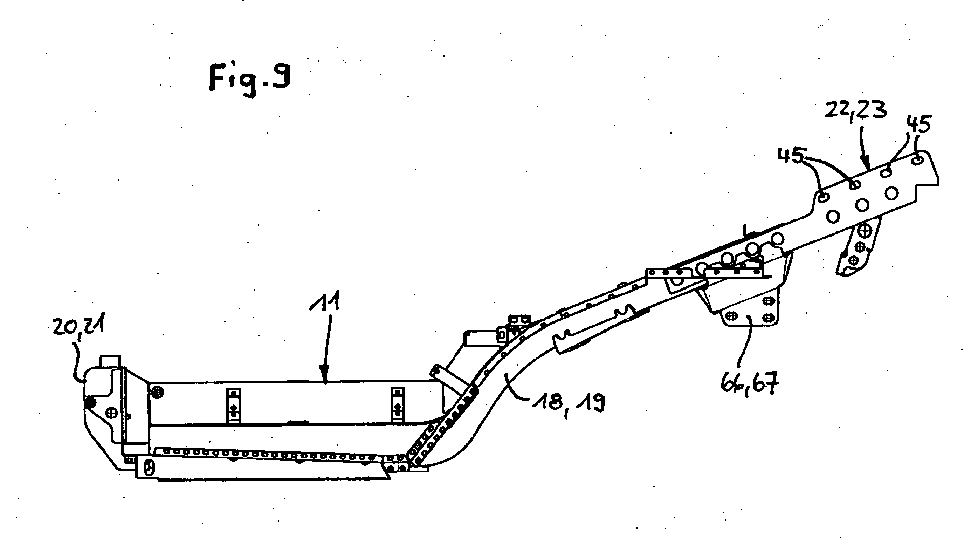

- Fig. 9: die Bodengruppe des Fahrerhaus-Frontmoduls aus Fig. 1 in Seitenansicht von links,

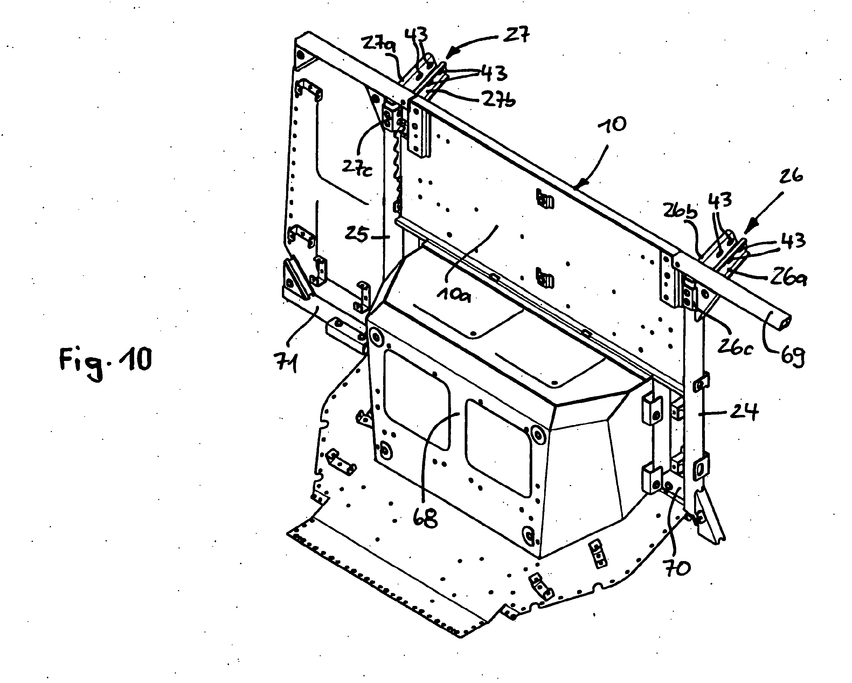

- Fig. 10: die Rückwand-Baugruppe des Fahrerhaus-Frontmoduls aus Fig. 1 in Perspektivansicht von links vorne oben,
- Fig. 11: die Rückwand-Baugruppe des Fahrerhaus-Frontmoduls aus Fig. 1 in Seitenansicht von links,

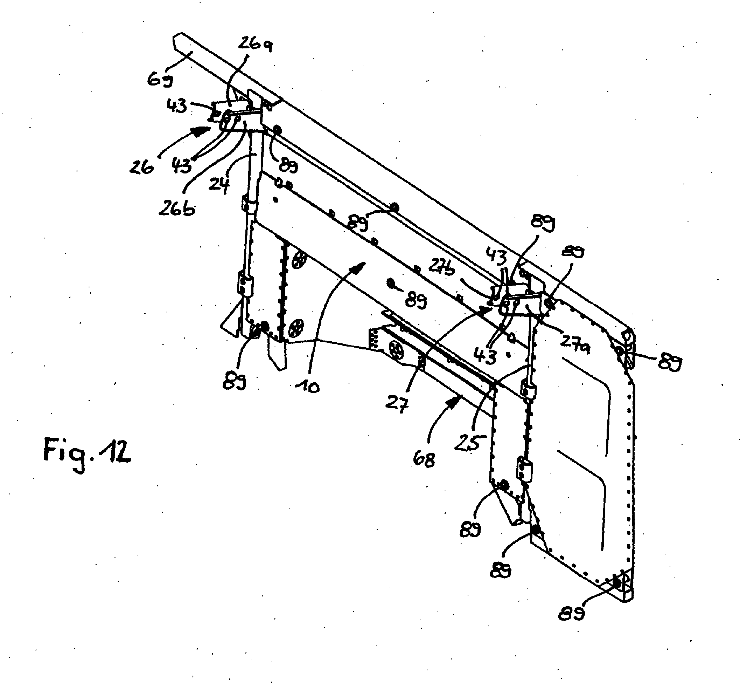

- Fig. 12: die Rückwand-Baugruppe des Fahrerhaus-Frontmoduls aus Fig. 1 in Perspektivansicht von rechts hinten,

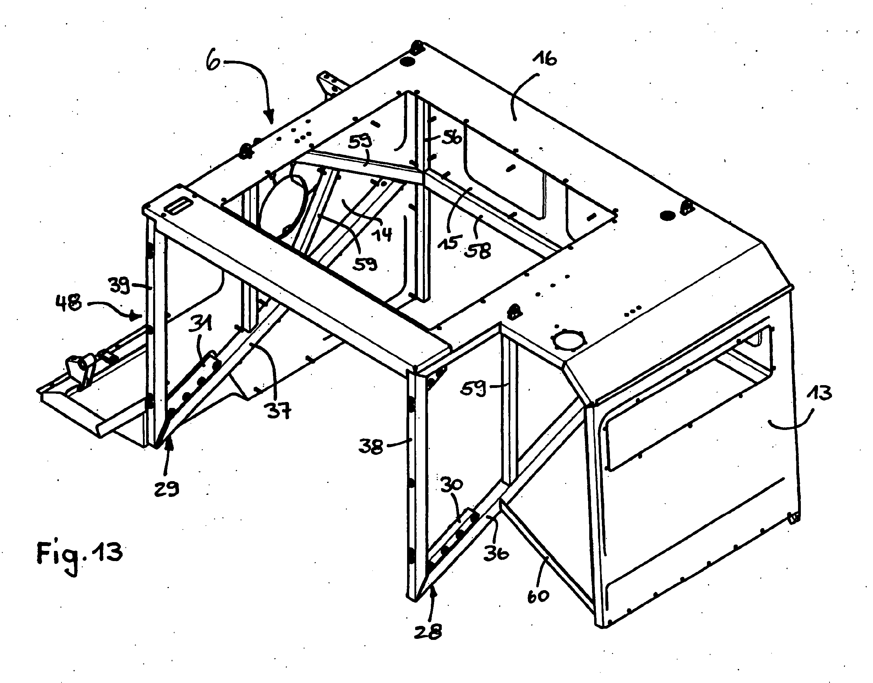

- Fig. 13: das Fahrerhaus-Heckmodul aus Fig. 1 in Perspektivansicht von vorne links oben,

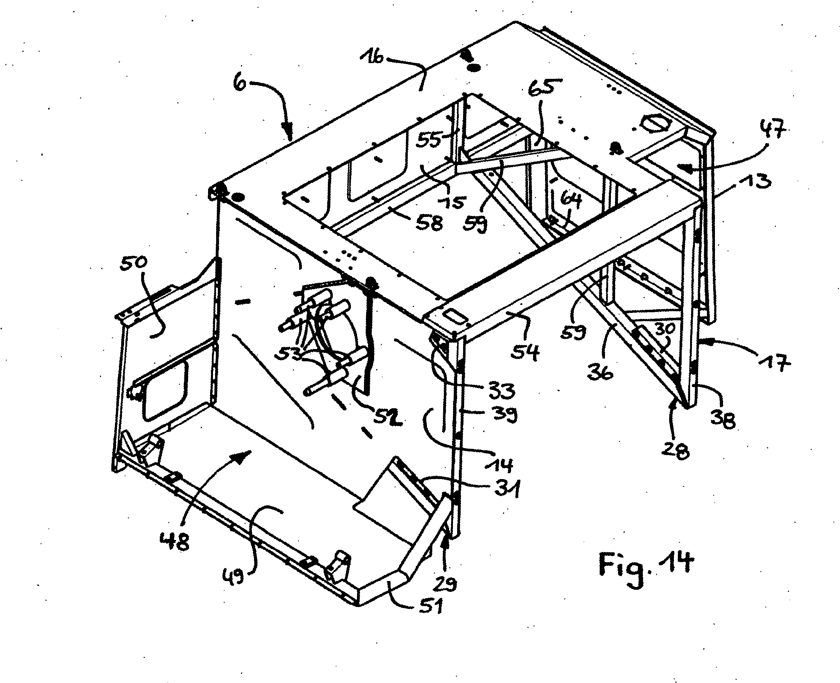

- Fig. 14: das Fahrerhaus-Heckmodul aus Fig. 1 in Perspektivansicht von vorne rechts oben,

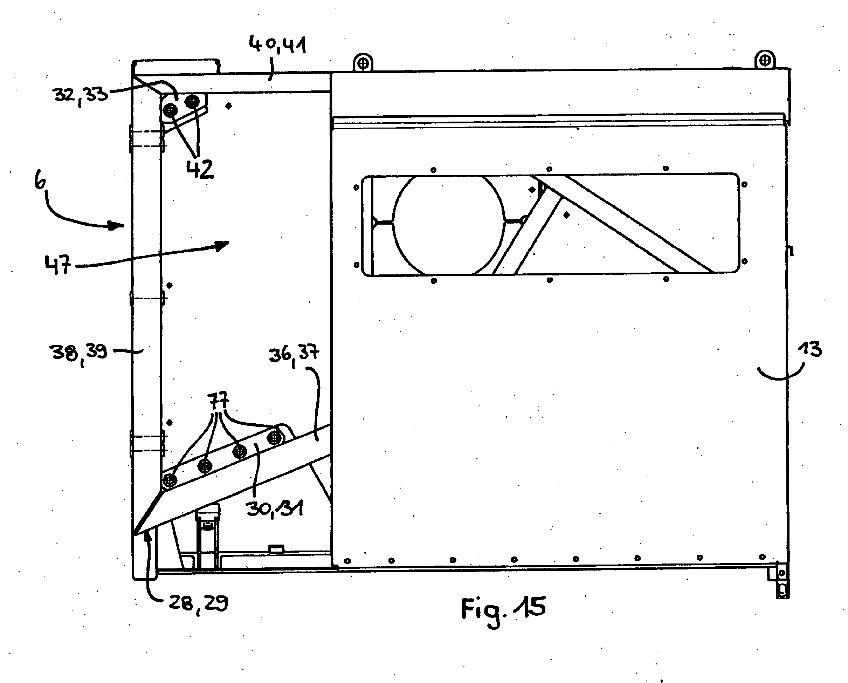

- Fig. 15: das Fahrerhaus-Heckmodul aus Fig. 1 in Seitenansicht von links,

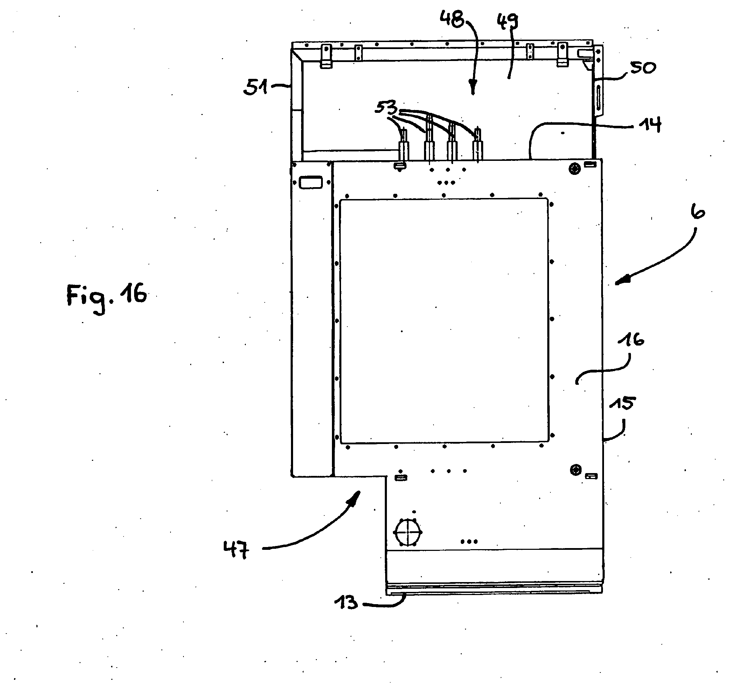

- Fig. 16: das Fahrerhaus-Heckmodul aus Fig. 1 in Draufsicht,

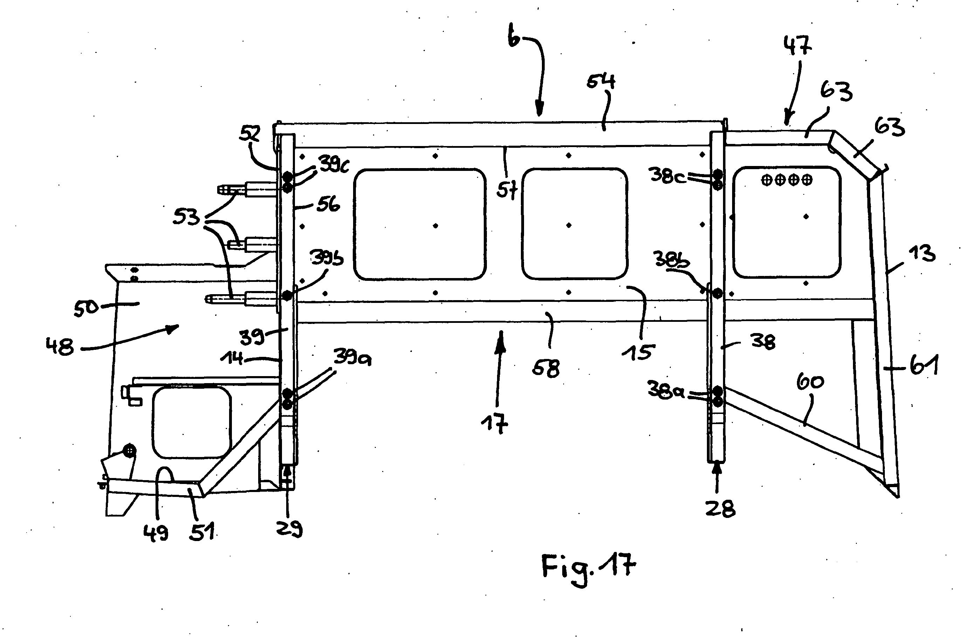

- Fig. 17: das Fahrerhaus-Heckmodul aus Fig. 1 in Ansicht von vorne,
- Fig. 18: das erfindungsgemäße Fahrerhaus in Anbaulange am Fahrgestell-Rahmen eines Lastkraftwagens,
- Fig. 19: im Detail die Art der Verbindung zwischen Fahrerhaus-Frontmodul und -Heckmodul, und
- Fig. 20: die Verbindung zwischen Fahrerhaus-Frontmodul und -Heckmodul in schematischem Schnitt mit einer Panzerung dazwischen.

Die Erfindung betrifft generell Lastkraftwagen mit einem auf dem Rahmen eines Fahrgestells kippbar angeordneten Fahrerhaus. In den Figuren ist als Anwendungsbeispiel für den Lastkraftwagen ein Militär-Lastkraftwagen mit einem gepanzerten Fahrerhaus abschnittsweise in den für das Verständnis der Erfindung maßgeblichen Bereichen gezeigt. Die Panzerung des Fahrerhauses ist ebenfalls nur in den der Erfindung zuzurechnenden Fahrerhaus-Bereichen dargestellt.

Das Fahrerhaus 1 des Lastkraftwagens ist generell über nicht im Detail dargestellte vordere Lager 2, 3 und weitere Mittel am Fahrgestellrahmen 4 angelenkt, welche Lager 2, 3 die Schwenkachse für ein Kippen des Fahrerhauses 1 bilden. Der Fahrgestellrahmen 4 besteht aus zwei durch Querträger miteinander verbundenen Rahmenlängsträgern.

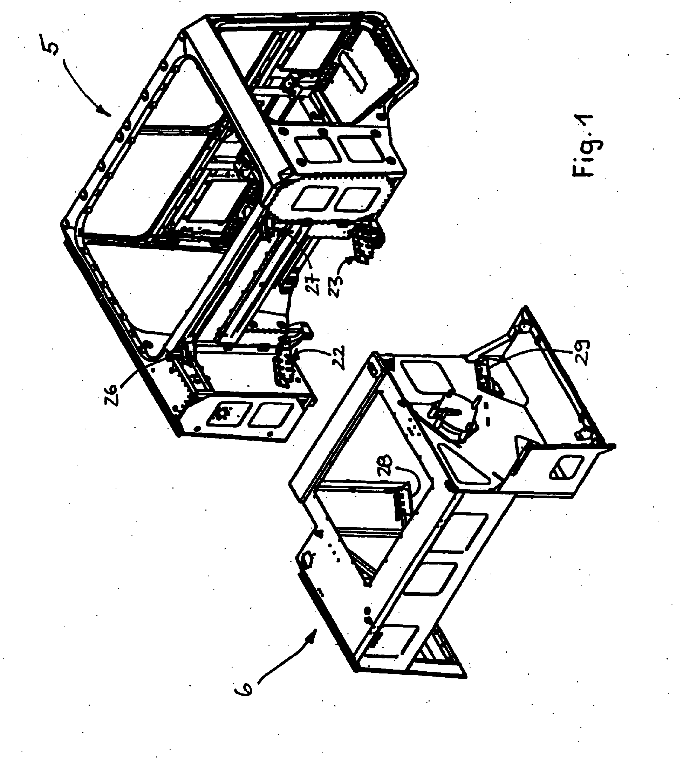

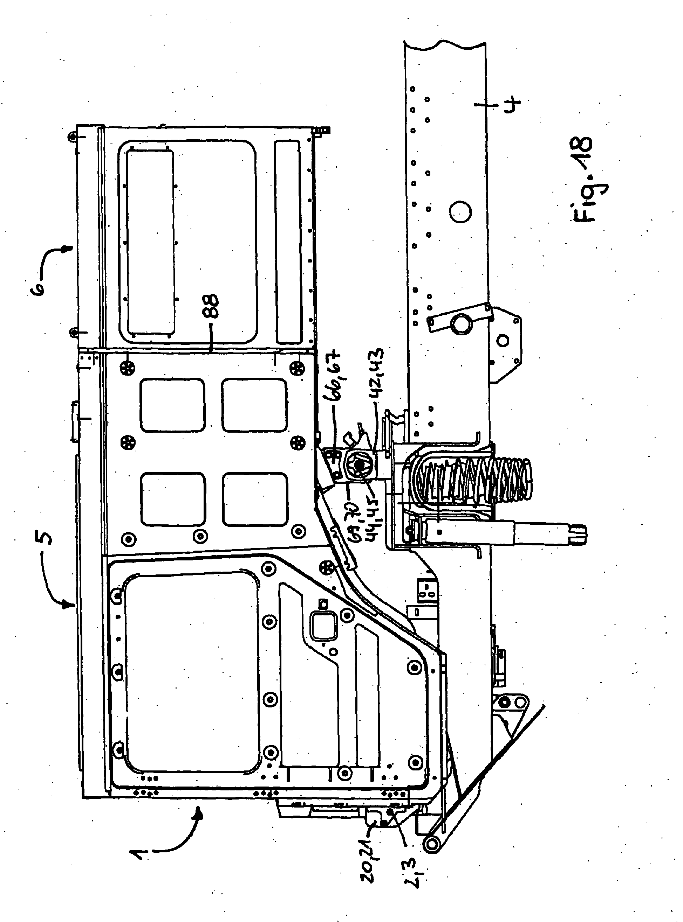

Entsprechend der Erfindung ist das Fahrerhaus 1 aus einem Frontmodul 5 und einem Heckmodul 6 zusammengesetzt. Diese beiden Fahrerhaus-Module 5, 6 sind in ihren Einzelheiten gut aus Fig. 1 und in zusammengebauter Version gut aus Fig. 18 ersichtlich. Nachstehend ist auf weitere erfindungsgemäße Details betreffend die Bauart der beiden Fahrerhaus-Module 5, 6 und deren Verbindung näher eingegangen.

Das Fahrerhaus-Frontmodul 5 weist eine Frontwand 7, eine linke Seitenwand 8, eine rechte Seitenwand 9, eine Rückwand 10, einen Boden 11 und ein Dach 12 auf und bildet eine in sich geschlossene Kabine für Fahrer und Beifahrer. In der Zeichnung ist nur das Rohhaus gezeigt, das heißt, alle An- und Einbauten in die Wände des Fahrerhauses wie Türen, Windschutzscheiben, Dacheinbauten, Innenausstattung, etc. sind der Übersichtlichkeit wegen nicht dargestellt.

Das Fahrerhaus-Heckmodul 6 weist ein im dargestellten Beispiel durch eine linke Seitenwand 13 und rechte Seitenwand 14 sowie zumindest partiell durch weitere Wände 15, 16 verkleidetes Traggestell 17 auf und bildet einen haubenartigen Schutz- und Aufnahmeraum für das Antriebsaggregat und weitere Fahrzeugteile sowie Zubehör, wie z. B. Kühler, Lüfter, Luftansaugrohre, Luftfilter, Druckluft - und Betriebsstoffbehälter, Batterien, Reserverad und dergleichen.

Das Fahrerhaus-Heckmodul 6 ist erfindungsgemäß hinten am Fahrerhaus-Frontmodul 5 in spezieller Art und Weise lösbar befestigt und wird auch vom Frontmodul 5 getragen.

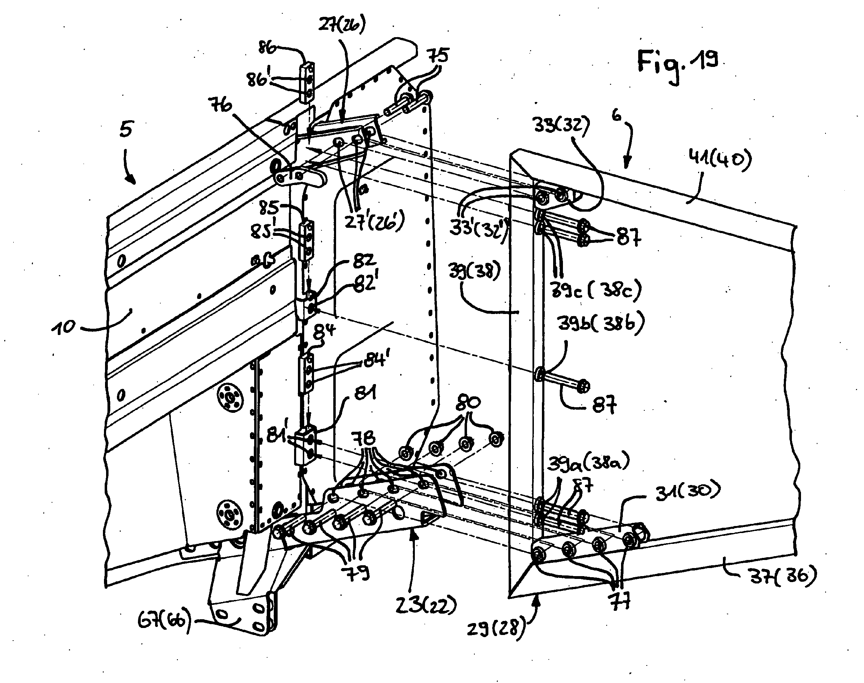

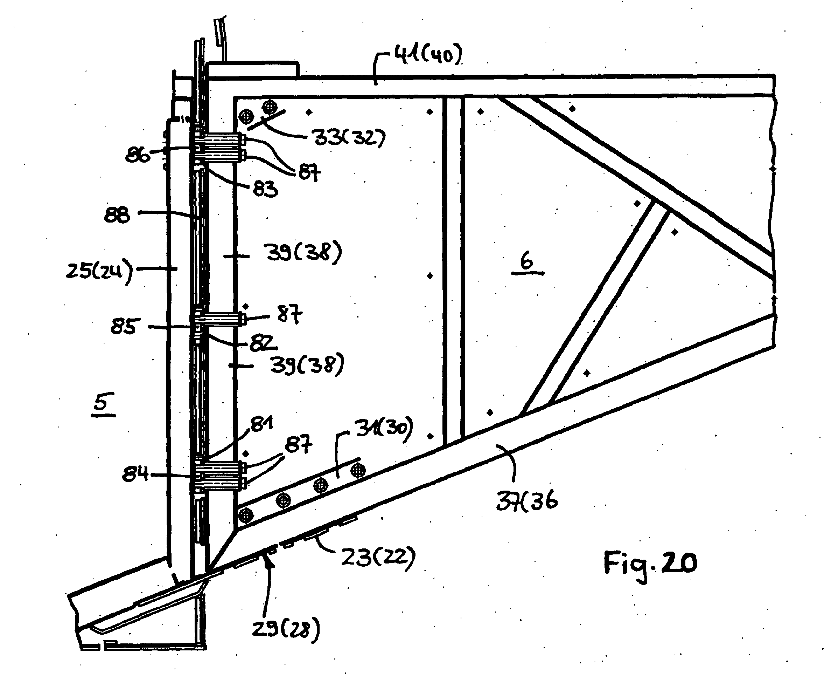

Der Boden 11 des Fahrerhaus-Frontmoduls 5 ist durch zwei voneinander beabstandete Bodenlängsträger 18, 19 versteift. An deren jeweiligem vorderen Ende ist im dargestellten Beispiel ein Gehäuse 20, 21 für ein vorderes Fahrerhauslager 2, 3 angeordnet, das jedoch nicht im Detail dargestellt ist. Jeder der beiden Bodenlängsträger 18, 19 ist an seinem hinteren Ende durch eine die Frontmodul-Rückwand 10 hinten überragende Tragkonsole 22, 23 ergänzt. Die Bodenlängsträger 18, 19 fungieren mit den daran befestigten Tragkonsolen 22, 23 als Träger für das Fahrerhaus-Heckmodul 6. Die Frontmodul-Rückwand 10 weist zu ihrer Versteifung ein Gerippe auf, das aus mehreren miteinander verbundenen Holmen besteht. Im vorliegenden Beispiel sind die beiden mit 24, 25 bezeichneten Vertikalholme von Interesse, denn diese sind als Träger für verschiedene, weiter hinten noch näher beschriebene, frontmodulseitige Abstütz- und Verbindungsorgane herangezogen. Diesen im Bereich der Frontmodul-Rückwand 10 in verschiedenen Höhenlagen angeordneten Abstütz- und Verbindungsorganen sind entsprechend angepasste Abstütz- und Verbindungsorgane am Vorderbereich des Heckmodul-Traggestells 17 zugeordnet. Die einander zugeordneten Abstütz- und Verbindungsorgane weisen zueinander fluchtende Bohrungen bzw. Löcher auf - siehe insbesondere Figuren19, 20 - , durch die Schrauben hindurchführbar sind, mittel welcher die beiden Fahrerhaus-Module 5, 6 in Anbaulage in Längs-, Quer- und Vertikalrichtung sicher, aber lösbar miteinander verbunden sind.

Im dargestellten Beispiel erstrecken sich die beiden frontmodulseitigen Tragkonsolen 22, 23 hinter der Frontmodul-Rückwand 10 in einer zur Fahrzeuglängsvertikalebene parallelen Ebene und weisen jeweils eine sich unter gleichem spitzen Winkel zur Horizontalen schräg nach hinten oben erstreckende Auflagefläche 34 bzw. 35 auf.

Die zugehörigen heckmodulseitigen Abstützorgane 28, 29 sind jeweils durch einen vorne unten an einem Holm 36, 37 des Heckmodul-Traggestells 17 angeordneten Abschnitt gebildet, wobei die Unterkanten dieser Abschnitte 28, 29 unter gleich schrägem Winkel zur Horizontalen angeordnet sind wie die zugehörigen Anlageflächen 34, 35 an den frontmodulseitigen Tragkonsolen 22, 23. Auf diese Weise ist das Fahrerhaus-Heckmodul 6, wenn in Anbauposition in Bezug auf das Fahrerhaus-Frontmodul 5 befindlich, über schräge Rampen an letzterem abgestützt.

Als Organe für eine obere quer- und vertikalsichere Befestigung des Heckmoduls 6 am Frontmodul 5 sind zwei Befestigungskonsolen 26, 27 vorgesehen, von denen jede im oberen Bereich eines die Frontmodul-Rückwand 10 versteifenden Vertikalholmes 24, 25 angeordnet ist. Diesen Befestigungskonsolen 26, 27 sind am Traggestell 17 des Heckmoduls 6 entsprechend angepasste Befestigungsorgane 32, 33 zugeordnet.

Die beiden frontmodulseitigen Befestigungskonsolen 26, 27 erstrecken sich im dargestellten Ausführungsbeispiel hinter der Frontmodul-Rückwand 10 jeweils in einer zur Fahrzeuglängsvertikalebene parallelen Ebene unter einem spitzen Winkel zur Horizontalen schräg nach hinten oben und sind jeweils durch ein in Draufsicht gesehen U-förmiges Blech-Stanz-Biege-Teil gebildet, das jeweils zwei zueinander parallel verlaufende und beabstandete Seitenwagen 26a, 26b bzw. 27a, 27b aufweist, die durch einen Quersteg 26c bzw. 27c miteinander verbunden sind. Jede dieser U-förmigen Befestigungskonsolen 26, 27 ist am oberen Bereich eines der beiden die Rückwand 10 des Frontmoduls 5 versteifenden Vertikalträgers 24, 25 - diesen vorne und seitlich außen übergreifend - befestigt, insbesondere angeschweißt. Die zugehörigen heckmodulseitig oberen Befestigungs-organge 32, 33 sind jeweils durch im Eckbereich zwischen einem vorderen Vertikalholm 38 bzw. 39 und einem oberen Längsholm 40, 41 des HeckmodulTraggestells 17 befestigte Halteplatten gebildet. Diese Traggestell-Eckbereiche mit den Halteplatten (32, 33) sind bei in Anbauposition am Frontmodul 5 befindlichem Heckmodul 6 jeweils zwischen den beiden Seitenwangen 26a, 26b bzw. 27a, 27b der jeweiligen Befestigungskonsole 26 bzw. 27 eingepasst aufgenommen und weisen jeweils wenigstens eine Querdurchgangsbohrung 32', 33' auf, zu der Querdurchgangslöcher 26', 27' in den Seitenwangen 26a, 26b, bzw. 27a und 27b der frontmodulseitigen Befestigungskonsolen 26, 27 fluchten, um zur Befestigung der beiden Fahrerhausmodule 5, 6 dienende Schrauben 75 aufzunehmen. Diese Schrauben 75 greifen - wie gut aus Fig. 19 ersichtlich - in Gewindebohrungen von Muttern oder Gewindeplatten 76 ein, die sich an den den Schraubenköpfen gegenüberliegenden Außenseiten der Befestigungskonsolen 26, 27 abstützen. Auf diese Weise ist eine vertikal- und quersichere obere Befestigung des Heckmoduls 6 am Frontmodul 5 gewährleistet.

Im unteren Bereich stellt sich die Verbindung zwischen Frontmodul 5 und Heckmodul 6 im dargestellten Beispiel wie folgt dar.

Die frontmodulseitigen Tragkonsolen 22, 23 sind jeweils durch ein Blech-Stanz-Biege-Teil gebildet, das am Endbereich des zugehörigen Bodenlängsträgers 18, 19 befestigt ist und zumindest über einen Großteil des Auflage- /und Anschlussbereiches für die heckmodulseitig unteren Abstützorgane 28, 29 und Befestigungsorgane 30, 31 einen U-förmigen, nach oben offenen Querschnitt aufweist, wobei die Böden 34 bzw. 35 in diesen Querschnittsbereichen im Wesentlichen die vertikale Stütz- und Tragfunktion und die Seitenwände 22a, 22b bzw. 23a, 23b mit ihren Querdurchgangslöchem 78 in diesen Querschnittsbereichen die Quer- und Vertikalsicherungs- sowie Befestigungsfunktion für das angesetzte Heckmodul 6 übernehmen. Die zugehörigen heckmodulseitig unteren Befestigungsorgane 30, 31 sind in diesem Ausführungsbeispiel durch Halteschienen gebildet, die im Bereich der Abstützorgane 28, 29 oben auf den diese aufweisenden Holmen 36, 37 des Heckmodul-Tragegestells 17 aufliegend befestigt sind. Bei in Anbaulage am Frontmodul 5 befindlichem Heckmodul 6 sind die beiden frontseitigen Vertikalholme 38, 39 und die beiden sich dahinter anschließenden untere Holme 36, 37 des Heckmoduls 17 mit den aufgesetzten Halteplatten 30, 31 jeweils zwischen die beiden Seitenwände 22a, 22b bzw. 23a, 23b der jeweiligen Tragkonsole 22 bzw. 23 eingepasst aufgenommen und das Heckmodul 6 sitzt mit den Abstützorganen 28, 29 an seinem Traggestell 17 auf den Böden 34, 35 der Tragkonsolen 22, 23 auf. Durch die zueinander fluchtenden Schraubenlöcher 78 und Schraubeaufnahmebohrungen 77 sind Schrauben 79 hindurchgeführt, die in Gewindebohrungen von Muttern oder Gewindeplatten 80 eingreifen, die sich an den den Schraubenköpfen gegenüber liegenden Außenseiten der Tragkonsolen 22, 23 abstützen. Auf diese Weise ist eine vertikal- und quersichere untere Befestigung des Heckmoduls 6 am Frontmodul 5 sicherstellbar.

Für eine längssichere Abstützung und Befestigung des Heckmoduls 6 am Frontmodul 5 sind im dargestellten Beispiel folgende, insbesondere gut aus Figur 19 ersichtliche Mittel vorgesehen.

An den beiden die Frontmodul-Rückwand 10 versteifenden Vertikalholmen 24, 25 sind hierfür jeweils mehrere - hier drei - Anschlag- und Haltebügel 81, 82, 83 in verschiedenen Höhenlagen befestigt, insbesondere angeschweißt. Diese Anschlag- und Haltebügel 81, 82, 83 sind jeweils durch Blech-Stanz-Biege-Teile gebildet, haben einen U-förmigen Querschnitt und sind mit ihren seitlichen Bügeln am aufnehmenden Vertikalholm 24, 25 so angeschweißt, dass ihre Außenplatten von der Rückseite des jeweiligen Vertikalholms 24, 25 um ein gewisses Maß beabstandet sind. Hierdurch ist im Bereich des jeweiligen Anschlag- und Haltebügels 81, 82, 83 eine Tasche gegeben, in die jeweils eine Gewindeplatte 84, 85, 86 mit leichtem Spiel einschiebbar und dann darin schwimmend aufgenommen ist. Die Außenplatte jedes Anschlag- und Haltebügels 81, 82, 83 weist wenigstens ein Durchgangsloch 81', 82', 83' sowie eine die Frontmodul-Rückwand 10 hinten ein gewisses Maß überragende und in einer parallel zu ihr angeordneten Ebene sich erstreckende äußere Anlagefläche auf. An den jeweils drei solchermaßen in verschiedenen Höhenlagen an einem Vertikalholm 24, 25 gegebenen Anlageflächen kommt das Heckmodul 6 bei seinem Anbau am Frontmodul 5 mit den Stirnseiten seiner beiden vorderen Vertikalholme 38, 39 zum Anschlag. In den Vertikalholmen 38, 39 des Heckmodul-Traggestells 17 sind Durchgangsbohrungen 38a, 38b, 38c bzw. 39a, 39b, 39c vorhanden, die bei in Anbaulage am Frontmodul 5 befindlichem Heckmodul 6 zu den Durchgangslöchern 81', 82', 83' in den Außenplatten der Anschlag- und Haltebügel 81, 82, 83 fluchten und durch die Befestigungsschrauben 87 hindurchführbar sind, die mit ihren Gewinden in die Gewindebohrungen 84', 85', 86' der Gewindeplatten 84, 85, 86 einschraubbar sind. Durch Anziehen dieser Schrauben 87 werden die Gewindeplatten 84, 85, 86 innerhalb jedes Anschlag- und Haltebügels 81, 82, 83 gegen die Innenflächen von deren Außenplatten und die Stirnseiten der Vertikalholme 38, 39 gegen die Außenseiten der Anschlagplatten gepresst. Durch diese kraftschlüssigen Verbindungen ist das Heckmodul 6 in Längsrichtung gesehen sicher am Frontmodul 5 befestigt.

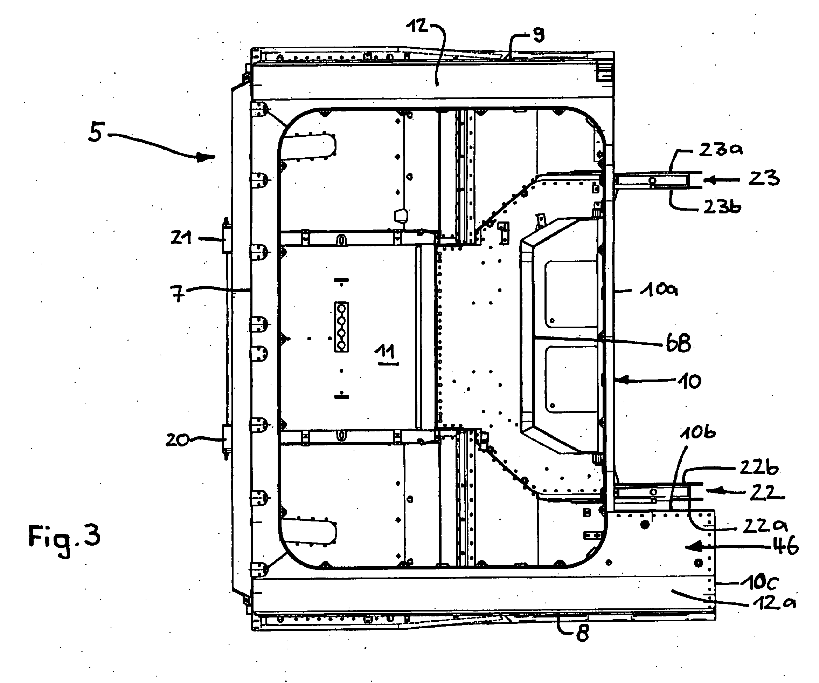

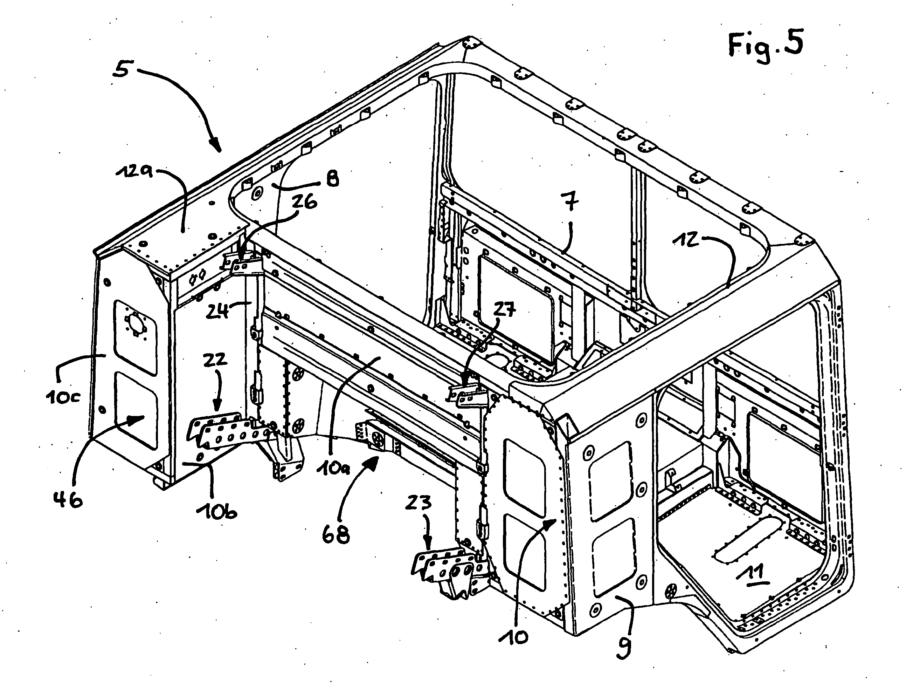

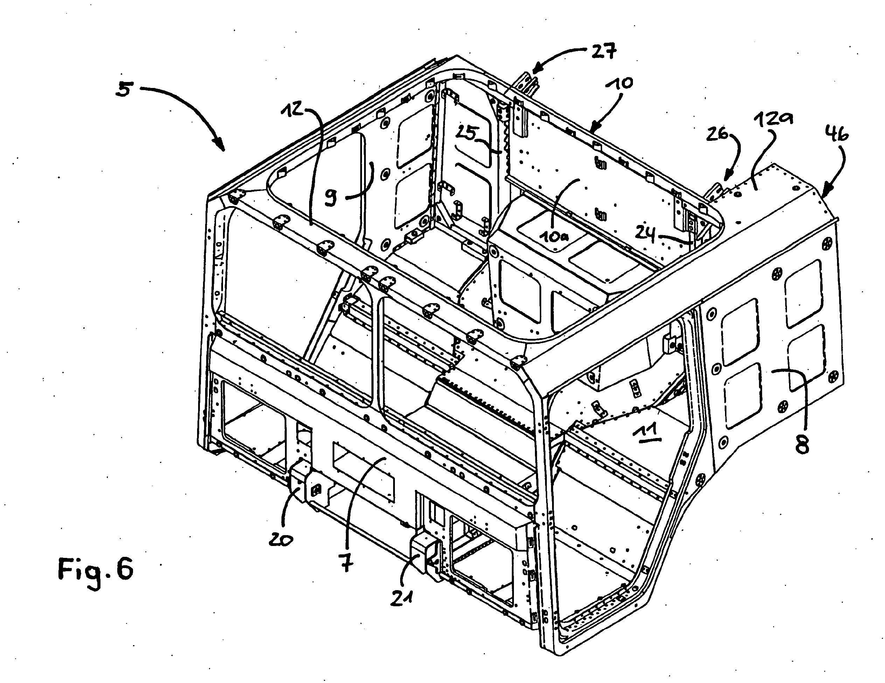

Wie gut aus den Figuren 1, 3, 5, 6 ersichtlich, ist im dargestellten Ausführungsbeispiel eine der beiden Seitenwände 8, 9 des Fahrerhaus-Frontmoduls 5 - hier 8 - länger als die gegenüberliegend angeordnete Seitenwand - hier 9 - ausgebildet. Außerdem ist die rückwärtige Verbindung dieser beiden ungleich langen Seitenwände 8, 9 durch eine in sich abgewinkelte Rückwand 10 gebildet, wobei neben einem weitgehend ebenen Rückwand-Abschnitt 10a ein diesen nach hinten überragender Fahrerhauserker 46 geschaffen ist, der innen durch einen Rückwand-Abschnitt 10b, hinten durch einen Rückwand-Abschnitt 10c und oben durch eine entsprechende Erweiterung 12a des Daches 12 begrenzt ist. Dieser Ausführungsform entsprechend angepasst weist das Fahrerhaus-Heckmodul 6 in seinem Vorderbereich eine einseitige Aussparung 47 solcher Größe auf, dass in diese der hinten am Frontmodul 5 vorspringende Fahrerhauserker 49 beim Anbau des Heckmoduls 6 am Frontmodul 5 eintauchen kann. In diesem Fall erfolgt die Verbindung zwischen Frontmodul 5 und Heckmodul 6 mittels der hierfür vorgesehenen, weiter vorne bereits beschriebenen Organe nur in dem nicht dem Fahrerhauserker 46 bzw. der zugehörigen Aussparung 47 zugehörigen Fahrerhaus-Bereich, also nur hinter dem geraden Rückwand-Abschnitt 10a.

Des Weiteren weist das Fahrerhaus-Heckmodul 6 im dargestellten Ausführungsbeispiel auf seiner der Aussparung 47 gegenüber liegenden Seite einen Aufnahmebereich 48 für ein Reserverad (nicht dargestellt) und eine zugehörige Hub-/Absenkvorrichtung (ebenfalls nicht dargestellt) für dieses auf. Dieser Aufnahmebereich 48 ist innen durch die gegenüber der seitengleichen Seitenwand - hier 9 - des Frontmoduls 5 nach innen gerückte Seitenwand 14 des Heckmoduls 6, einen Boden 49 und eine hintere Schottwand 50 begrenzt, aber zur Seite hin offen. Der Boden 49 ist durch eine versteifende Trägeranordnung 51 gestützt, die ein Teil des Heckmodul-Traggestells 17 bildet.

Eine Halteplatte 52 mit seitlich abragenden Tragzapfen 53 ist an der Seitenwand 14 anliegend am Traggestell 17 befestigt und trägt auf ihren Tragzapfen 53 das darauf befestigte Reserverad.

Im dargestellten Ausführungsbeispiel besteht das Traggestell 17 des Heckmoduls 6 aus folgenden Teilen:
- den beiden zueinander parallelen vorderen Vertikalholmen 38, 39, die für entsprechende Einpassung in die frontmodulseitigen Tragkonsolen 22, 23 beabstandet und zur Bildung eines nach vorne offenen Portals oben durch einen Querholm 54 miteinander verbunden sind;
- zwei zueinander parallel und im Abstand der vorderen Vertikalholme 38, 39 angeordneten hinteren Vertikalholmen 55, 56, die durch einen oberen Querholm 57 und einen mittleren Querholm 58 miteinander verbunden sind, zusammen mit den Vertikalholmen 55, 56 die Versteifung der Heckmodul-Rückwand 15 bilden und außerdem mit den vorderen Vertikalholmen 38, 39, den unteren schrägen Längsholmen 36, 37 und oberen, das Dach 16 versteifenden bzw. mit-tragenden Längsholmen 40, 41 verbunden sind, wobei das jeweilige Holmfeld in sich durch fachwertartig angeordnete Streben 59 versteift ist;
- neben dem vorgeschilderten portalartigen Traggestell-Bereich einen mit diesem durch Querholme 60 verstrebten, die Seitenwand 13 versteifenden und aus mehreren Einzelholmen 61, 62, 63, 64, 65 zusammengesetzten Gerippe.

Dabei schließt sich jeder der unteren Längsholme 36, 37 am unteren Ende des vorderen Vertikalholmes 38 bzw. 39 schräg nach hinten oben gerichtet an und schließt dabei mit seiner Unterseite zumindest im Bereich der Abstützflächen 28, 29 mit der Horizontalen einen spitzen Winkel ein, der jenem entspricht, den die Auflageflächen 34, 35 an den frontmodulseitigen Tragkonsolen 22, 23 mit der Horizontalen einschließen.

Nachfolgend ist auf die erfindungsgemäße Art der Panzerung des Fahrerhauses näher eingegangen.

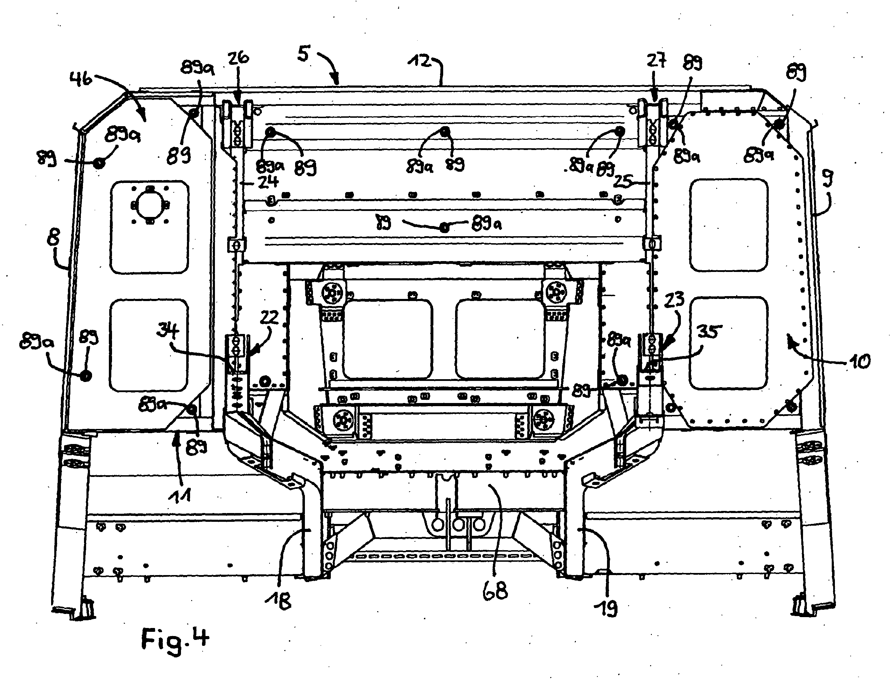

Die rückseitige Panzerung des Fahrerhauses würde üblicherweise am hinteren Ende des Heckmoduls angebracht. Die Erfindung beschreibt demgegenüber aber einen anderen Weg, denn es wird bei ihr die rückseitige Panzerung des Fahrerhauses 1 durch zwischen dessen Frontmodul 5 und Heckmodul 6 eingebaute Panzerplatten 88 realisiert, siehe Fig. 18 und 20. Dabei sind mehrere Panzerplatten 88 nebeneinander vorgesehen, die vor dem Heckmodul 6 an der Frontmodul-Rückwand 10, diese vollständig bzw. zumindest weitgehend überdeckend, befestigt sind. Im dargestellten Beispiel sind vier Panzerplatten 88 vorgesehen, von denen eine den Rückwand-Abschnitt 10c hinten am Erker 46 abdeckt, eine weitere den seitlich am Erker 46 gegebenen Rückwand-Abschnitt 10 b abdeckt, eine dritte etwa 2/3 links - von hinten wie in Fig. 4 gesehen - des Rückwand-Abschnitts 10 a abdeckt, und eine vierte den rechten 1/3-Rest des Rückwand-Abschnitts 10 a abdeckt. Bevorzugt sind diese Panzerplatten 88 lösbar an der Frontmodul-Rückwand 10 befestigt. Die Panzerplatten 88 weisen hierfür jeweils mehrere, in Eckbereichen oder zum Rand hingerückt angeordnete Durchgangsbohrungen auf, durch welche Befestigungsschrauben hindurchgeführt sind, die in intern der Frontmodul-Rückwand 10 angeordnete Gewinde eingeschraubt sind und im angezogenen Zustand die Panzerplatten 88 gegen an der Frontmodul-Rückwand 10 vorhandene Anschlagstellen anpressen.

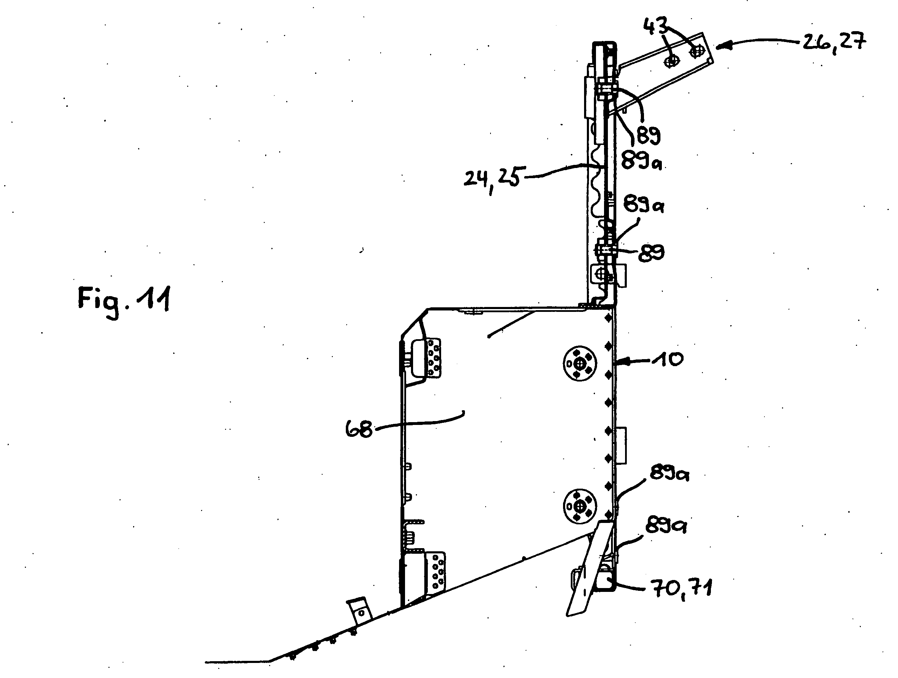

Im dargestellten Beispiel sind die intern der Frontmodul-Rückwand 10 zur Befestigung der Panzerplatten 88 vorhandenen Gewinde in Gewindehülsen 89 enthalten, die in die Struktur der Frontmodul-Rückwand 10 eingeschweißt sind und jeweils einen Auflageflansch 89a aufweisen, der eine Anschlagstelle für die Abstützung einer daran zu befestigenden Panzerplatte 88 bildet - siehe hierzu insbesondere Figuren 4, 11 und 20.

Die Panzerplatten 88 sind je nach dem Grad der Beschusssicherheit durch entsprechend in ihrer Dicke bemessene Stahl- oder Sandwich-Platten gebildet, wobei die Sandwich-Platten aus mehreren übereinander angeordneten und fest miteinander verbundenen unterschiedlichen Materiallagen aus Stahl oder sonstigen Metallen bzw. Metalllegierungen, faser- oder vliesverstärkten Kunststoffen, Keramik oder Keramikverbundwerkstoffen und dergleichen zusammengesetzt sein können.

Auf die maximal vorgesehene Dicke der Panzerplatten 88 ist auch der Abstand der Außenplatten der Anschlag- und Haltebügel 81, 82, 83 abgestimmt, an denen das Heckmodul 6 in Anbaulage am Frontmodul 5 abgestützt ist. Das heißt, die Panzerplatten 88 sind an der Frontmodul-Rückwand 10 so an den dortigen Auflageflanschen 89a der Gewindehülsen 89 abgestützt, dass zwischen den Außenflächen der Panzerplatten 88 und dem benachbarten Heckmodul 6, wenn am Frontmodul 5 angebaut, nur ein minimaler Abstand verbleibt. Dies ist gut aus Figur 20 ersichtlich.

Nachfolgend noch einige allgemeine Anmerkungen zur Fahrerhausherstellung.

Der Boden 11 des Fahrerhaus-Frontmoduls 5 wird zusammen mit den Bodenlängsträgern 18, 19, den an diesen endseitig angebrachten Tragkonsolen 22, 23 und weiteren Anbauteilen wie Konsolen 66, 67 für die hintere Fahrerhauslagerung als eigenständige Boden-Baugruppe komplett vorgefertigt und vormontiert.

Ebenso wird die Rückwand 10 des Fahrerhaus-Frontmoduls 5 zusammen mit den sie versteifenden Trägern 24, 25 und weiteren Holmen 69, 70, 71 sowie den an den Trägern 24, 25 angebrachten Befestigungskonsolen 26, 27, Anschlag- und Haltebügeln 81, 82, 83 und weiteren Anbauteilen wie einer Motorraumbegrenzungshaube 68 als eigenständige Rückwand-Baugruppe komplett vorgefertigt und vormontiert.

Die vorgefertigte Boden-Baugruppe und vorgefertigte Rückwand-Baugruppe werden nach ihrer jeweiligen Herstellung miteinander und mit den übrigen Wänden 7, 8, 9 sowie dem Dach 12 des Rohfahrerhaus-Frontmoduls 5 verbunden.

Ebenso werden das Fahrerhaus-Heckmodul 6 und das Fahrerhaus-Frontmodul 5 jeweils eigenständig vorgefertigt und vormontiert. Am Fahrerhaus-Frontmodul 5 werden auch schon die Panzerplatten angebracht. Diese beiden vormontierten Fahrerhaus-Module 5, 6 werden bei der Fahrerhausendmontage an den hierfür vorbereiteten Stellen zusammengefügt und über die vorgesehenen Schraubverbindungen lösbar miteinander verbunden.

Dieses solchermaßen aus den beiden Modulen 5, 6 zusammengesetzte Fahrerhaus 1 ist kippbar in einer Weise am Fahrgestell-Rahmen 4 des Lastkraftwagens angelenkt, wie aus Fig. 18 ersichtlich. Die vordere Lagerung des Fahrerhauses 1 erfolgt mittels der vorderen Lager 2, 3 im Bereich der bodenseitig vorderen Lagergehäuse 20, 21 in Verbindung mit entsprechenden Lagerkonsolen im Vorderbereich des Fahrgestell-Rahmens 4. Die hintere Fahrerhauslagerung erfolgt, wie gut aus Fig. 18 ersichtlich, im dargestellten Ausführungsbeispiel etwa in der Mitte der Längserstreckung des zusammengebauten Fahrerhauses 1, aber noch im Bereich des Bodens 11 des Fahrerhaus-Frontmoduls 5, über an dortigen bodenseitigen Konsolen 66, 67 angebrachte Verschlusselemente 69, 70, die mit an rahmenseitigen Konsolen 42, 43 angeordneten Verschlüssen 44, 45 zusammenwirken.

Das erfindungsgemäße Fahrerhaus überdeckt mit dem hinteren Abschnitt des Frontmoduls 5 und dem vorderen Bereich des Heckmoduls 6 ein darunter zwischen den beiden Längsträgern des Fahrgestell-Rahmens 4 eingebautes Antriebsaggregat, das üblicherweise aus einem Verbrennungsmotor, einer Kupplung und einem Gangwechsel- oder Automatikgetriebe besteht. Das Heckmodul 6 des Fahrerhauses 1 dient mithin einerseits als Schutzhaube für darunter am Fahrgestell-Rahmen 4 angebaute Fahrzeugaggregate und -teile wie das Antriebsaggregat, Kühler, Lüfter, etc., andererseits auch als Verstauraum für andere Fahrzeug-komponenten sowie Zubehör wie das Reserverad und dergleichen. Darüber hinaus bildet das Heckmodul eine erste Sicherheitszone gegen Beschuss von hinten.

## Patentansprüche

1. Lastkraftwagen, insbesondere solche für militärische Einsatzzwecke, mit einem Fahrgestell und einem auf dessen Rahmen (4) kippbar angeordneten Fahrerhaus (1), das an bestimmten Stellen durch aufgesetzte Panzerplatten (88) geschützt ist, **dadurch gekennzeichnet, dass** das Fahrerhaus (1) aus einem Frontmodul (5) und einem Heckmodul (6) zusammengesetzt ist, wobei das Frontmodul (5) eine Frontwand (7), zwei Seitenwände (8, 9), eine Rückwand (10), einen Boden (11) und ein Dach (12) aufweist und eine Kabine für Fahrer und Beifahrer bildet, wohingegen das Heckmodul (6) ein zumindest partiell durch Wände (13, 14, 16) verkleidetes Traggestell (17) aufweist und einen haubenartigen Schutz- und Aufnahmeraum für das Antriebsaggregat und weitere Fahrzeugteile sowie Zubehör bildet, dass das Heckmodul (6) hinten am Frontmodul (5) lösbar befestigt und von diesem getragen ist, und dass die rückseitige Panzerung des Fahrerhauses (1) durch zwischen dessen Frontmodul (5) und Heckmodul (6) eingebaute Panzerplatten (88) realisiert ist.

2. Lastkraftwagen nach Anspruch 1, **dadurch gekennzeichnet, dass** mehrere nebeneinander angeordnete Panzerplatten (88), vorgesehen sind, die vor dem Heckmodul (6) an der Frontmodul-Rückwand (10), diese vollständig bzw. zumindest weitgehend überdeckend, befestigt sind.

3. Lastkraftwagen nach Anspruch 2, **dadurch gekennzeichnet, dass** die Panzerplatten (88) lösbar an der Frontmodul-Rückwand (10) befestigt sind.

4. Lastkraftwagen nach Anspruch 3, **dadurch gekennzeichnet, dass** die Panzerplatten (88) jeweils mehrere, in Eckbereichen oder zum Rand hingerückt angeordnete Durchgangsbohrungen aufweisen, durch welche Befestigungsschrauben hindurchgeführt sind, die in intern der Struktur der Frontmodul-Rückwand (10) angeordneten Gewinde eingeschraubt sind und im angezogenen Zustand die Panzerplatten (88) gegen an der Frontmodul-Rückwand (10) gegebene Ansschlagstellen anpressen.

5. Lastkraftwagen nach Anspruch 4, **dadurch gekennzeichnet, dass** die intern der Frontmodul-Rückwand (10) zur Befestigung der Panzerplatten (88) vorgesehenen Gewinde in Gewindehülsen (89) vorgesehen sind, die in die Struktur der Frontmodul-Rückwand (10) eingeschweißt sind und jeweils einen Auflageflansch (89a) aufweisen, der eine Anschlagstelle für die Abstützung einer Panzerplatte (88) bildet.

6. Lastkraftwagen nach Anspruch 1, **dadurch gekennzeichnet, dass** die Panzerplatten (88) je nach dem Grad der Beschuss-Sicherheit durch entsprechend in ihrer Dicke bemessene Stahl- oder Sandwichplatten mit mehreren übereinander angeordneten unterschiedlichen Materiallagen aus Stahl, faser- oder vliesverstärkten Kunststoffen, Keramik oder Keramikverbundwerkstoffen und dergleichen gebildet sind.

7. Lastkraftwagen nach einem der vorhergehenden Ansprüchen, **dadurch gekennzeichnet, dass** die an der Frontmodul-Rückwand (1) befestigten Panzerplatten (88) bei in Anbaulage am Frontmodul (5) befindlichem Heckmodul (6) nur ein geringes Maß von letzterem beabstandet sind.

8. Lastkraftwagen nach Anspruch 1, **dadurch gekennzeichnet, dass** der Boden (11) des Fahrerhaus-Frontmoduls (5) durch zwei Bodenlängsträger (18, 19) versteift ist, die hinten durch die Frontmodul-Rückwand (10) nach hinten überragende Tragkonsolen (22, 23) ergänzt sind und mit diesen als Träger für das Fahrerhaus-Heckmodul (6) fungieren, dass am Traggestell (17) des Heckmoduls (6) unten Abstützorgane (28, 29) vorgesehen sind, mit denen das Heckmodul (6) bei seinem Anbau am Frontmodul (5) an dessen bodenträgerseitigen Tragkonsolen (22, 23) zur Auflage kommt, und dass im Bereich der Frontmodul-Rückwand (10) sowie im Vorderbereich des Heckmodul-Traggestells (17) in verschiedenen Höhenlagen einander zugeordnete Abstütz- und Verbindungsorgane ( 38, 39, 22a, 22b, 23a, 23b, 30, 31; 26, 27, 32, 33; 81, 82, 83) mit zueinander fluchtenden Bohrungen bzw. Löchern (77, 78, 26', 32', 27', 33', 81', 82', 83') vorgesehen sind, durch die Schrauben (75, 79, 87) hindurchführbar sind, mittels welcher die beiden Fahrerhaus-Module (5, 6) in Anbaulage in Längs-, Quer - und Vertikalrichtung sicher aneinander gehalten und miteinander befestigt sind.

9. Lastkraftwagen nach Anspruch 8, **dadurch gekennzeichnet, dass** die beiden frontmodulseitigen Tragkonsolen (22, 23) sich hinter der Frontmodul-Rückwand (10) in einer zur Fahrzeuglängsvertikalebene parallelen Ebene erstrecken und jeweils eine sich unter gleichem spitzen Winkel zur Horizontalen schräg nach hinten oben erstreckende Auflagefläche (34, 35) aufweisen, und dass die zugehörigen heckmodulseitigen Abstützorgane (28, 29) jeweils durch einen vorne an einem unteren Holm (36, 37) des Heckmodul-Traggestells (17) angeordneten Abschnitt gebildet sind, deren Unterkanten unter gleich schrägem Winkel zur Horizontalen angeordnet sind wie die zugehörigen Auflageflächen (34, 35) an den Frontmodul-Tragkonsolen (22, 23), so dass das Fahrerhaus-Heckmodul (6), wenn in Anschlag- und Verbindungsposition in Bezug auf das Fahrerhaus-Frontmodul (5) befindlich, mittels schräger Rampen gegenüber letzterem abgestützt ist.

10. Lastkraftwagen nach Anspruch 8, **dadurch gekennzeichnet, dass** als weitere Abstütz- und Verbindungsorgane für eine quer- und vertikalsichere Befestigung des Heckmoduls (6) am Frontmodul (5) zwei Befestigungskonsolen (26, 27) vorgesehen sind, von denen jede im oberen Bereich eines die Frontmodul-Rückwand (10) versteifenden Vertikalholmes (24, 25) angeordnet ist, und denen am Traggestell (17) des Heckmoduls (6) mit ihnen über die Schrauben (75) zu verbindende Befestigungsorgane (32, 33) zugeordnet sind.

11. Lastkraftwagen nach Anspruch 10, **dadurch gekennzeichnet, dass** jede der frontmodulseitigen Befestigungskonsolen (26, 27) sich hinter der Frontmodul-Rückwand (10) in einer zur Fahrzeug-Längsvertikalebene parallelen Ebene unter einem spitzen Winkel zur Horizontalen schräg nach hinten oben erstreckt und die heckmodulseitig zugeordneten Befestigungsorgane (32, 33) jeweils **dadurch** eine im Eckbereich zwischen einem Vertikalholm (38, 39) und einem oberen Längsholm (40, 41 ) des Heckmodul-Traggestells (17) befestigte Halteplatte gebildet sind, die wenigstens eine Querdurchgangsbohrung (32', 33') aufweist, zu der bei in Anbauposition am Frontmodul (5) befindlichem Heckmodul (6) Querdurchgangslöcher (26', 27') in den frontmodulseitigen Befestigungskonsolen (26, 27) fluchten, um zur vertikal- und quersicheren oberen Befestigung der beiden Fahrerhausmodule (5, 6) dienende Schrauben (75) aufzunehmen.

12. Lastkraftwagen nach einem der Ansprüche 8 und 9, **dadurch gekennzeichnet, dass** die frontmodulseitigen Tragkonsolen (22, 23) durch Blech-Stanz-Biege-Teile gebildet sind, die an den Endbereichen der beiden Bodenlängsträger (18, 19) befestigt sind und zumindest über einen Großteil des Auflage- und Anschlussbereiches für die heckmodulseitig unteren Abstützorgane (28, 29) und Befestigungsorgane (30, 31) einen U-förmigen, nach oben offenen Querschnitt aufweisen, wobei die Böden (34, 35) in diesen Querschnittsbereichen im Wesentlichen die Stütz- und Tragfunktion und die Seitenwände (22a, 22b, 23a, 23b) in diesen Querschnittsbereichen die Quer- und Vertikalsicherungs- sowie Befestigungsfunktion für das angesetzte Heckmodul (6) übernehmen.

13. Lastkraftwagen nach Anspruch 12, **dadurch gekennzeichnet, dass** heckmodulseitig untere Befestigungsorgane (30, 31) durch Halteschienen gebildet sind, die oben an den zur Abstützung dienenden, die schrägen Auflagebereiche (28, 29) aufweisenden Holmen (36, 37) des Heckmodul-Traggestells (14) aufliegend befestigt sind und jeweils mehrere Querdurchgangsbohrungen (77) aufweisen, zu denen bei in Anbauposition am Frontmodul (5) befindlichem Heckmodul (6) Querdurchgangslöcher (78) in den Seitenwänden (22a, 22b, 23a, 23b) der frontmodulseitigen Tragkonsolen (22, 23) fluchten, um zur vertikal- und quersicheren unteren Befestigung der beiden Fahrerhausmodule (5, 6) dienende Schrauben (79) aufzunehmen.

14. Lastkraftwagen nach einem der Ansprüche 10 und 11, **dadurch gekennzeichnet, dass** die beiden frontmodulseitigen Befestigungskonsolen (26, 27) jeweils durch ein in Draufsicht gesehen U-förmiges Blech-Stanz-Biege-Teil gebildet sind, bestehend jeweils aus zwei zueinander beabstandeten und parallelen Seitenwangen (26a, 26b, 27a, 27b), die durch einen Quersteg (26c, 27c) miteinander verbunden und jeweils am oberen Bereich eines der beiden die Frontmodul-Rückwand (10) versteifenden Vertikalholme (24, 25), diesen vorne und seitlich außen übergreifend, befestigt sind, wobei bei in Anbauposition am Frontmodul (5) befindlichem Heckmodul (6) dessen durch Halteplatten gebildete obere Befestigungsorgane (32, 33) jeweils zwischen den beiden Seitenwangen (26a, 26b, bzw. 27a, 27b) der jeweiligen frontmodulseitigen Befestigungskonsole (26, 27) eingepasst aufgenommen ist.

15. Lastkraftwagen nach Anspruch 8, **dadurch gekennzeichnet, dass** als Organe für eine Längsabstützung und -befestigung des Heckmoduls (6) am Frontmodul (5) an zwei Vertikalholmen (24, 25) des die Frontmodul-Rückwand (10) versteifenden Gerippes jeweils mehrere Anschlag- und -Haltebügel (81, 82, 83) in verschiedenen Höhenlagen befestigt, insbesondere angeschweißt sind, deren Außenplatten jeweils wenigstens ein Durchgangsloch (81', 82', 83') sowie eine die Frontmodul-Rückwand (10) hinten um ein gewisses Maß überragende und parallel zu deren Ebene angeordnete Auflagefläche für den beim Anbau am Frontmodul (5) mit vertikalen Gerippe-Holmen (38, 39) zur Anlage kommenden Heckmodul (6) aufweisen und in deren Innenraum jeweils eine wenigstens eine Gewindebohrung (84', 85', 86') aufweisende Gewindeplatte (84, 85, 86 ) schwimmend aufgenommen ist, und dass in den Vertikalholmen (38, 39) des Heckmodul-Traggestells (17) Durchgangsbohrungen (38a, 38b, 38c; 39a, 39b, 39c) vorgesehen sind, die bei in Anbauanlage am Frontmodul (5) befindlichem Heckmodul (6) zu den Durchgangslöchern (81', 82', 83') in den Anschlag- und Haltebügeln (81, 82, 83) fluchten und durch die Gewindeschrauben (87) hindurchgeführt sind, die mit ihren Gewinden in die Gewindebohrungen (84', 85', 86') der Gewindeplatten (84, 85, 86) eingeschraubt sind und diese in festgezogenem Zustand kraftschlüssig gegen die Innenflächen der Anschlag- und Haltebügel-Außenplatten pressen, wodurch das Heckmodul (6) mit den Stirnseiten seiner Holme (38, 39) kraftschlüssig an den Außenseiten der Anschlag- und Haltebügel-Außenplatten abgestützt ist.

16. Lastkraftwagen nach Anspruch 1, **dadurch gekennzeichnet, dass** eine der beiden Seitenwände (8, 9) des Fahrerhaus-Frontmoduls (5) länger als die gegenüber angeordnete Seitenwand ist und dass die rückwärtige Verbindung dieser beiden ungleich langen Seitenwände (8, 9) durch eine in sich abgewinkelte Rückwand (10) hergestellt ist, wodurch neben einem weitgehend ebenen Rückwand-Abschnitt (10a) ein diesen nach hinten überragender Fahrerhauserker (46) geschaffen ist, der seitlich und hinten durch Rückwand-Abschnitte (10b, 10c) und oben durch eine entsprechende Erweiterung (12a) des Daches (12) begrenzt ist.

17. Lastkraftwagen nach Anspruch 16, **dadurch gekennzeichnet, dass** das Fahrerhaus-Heckmodul (6) im Vorderbereich eine einseitige Aussparung (47) solcher Größe aufweist, dass in diese der vorspringende Fahrerhauserker (46) am Frontmodul (5) bei dessen Vereinigung mit dem Heckmodul (6) eintauchen kann, wobei jedoch die Verbindung zwischen Frontmodul (5) und Heckmodul (6) mittels der hierfür vorgesehenen Organe (22, 23, 28, 29, 26, 27, 32, 33, 81, 82, 83, 84, 85, 86; 75, 79, 87) nur in den nicht dem Fahrerhauserker (46) bzw. der Aussparung (47) zugehörigen Fahrerhaus-Bereich, also nur im Bereich des Rückwand-Abschnittes (10a) erfolgt.

18. Lastkraftwagen nach Anspruch 17, **dadurch gekennzeichnet, dass** das Fahrerhaus-Heckmodul (6) auf seiner der Aussparung (47) gegenüber liegenden Seite einen Aufnahmebereich (48) für ein Reserverad und eine zugehörige Hub-/Absenkvorrichtung aufweist, der innen durch die gegenüber der seitengleichen Seitenwand (8 bzw. 9) des Frontmoduls (5) nach innen gerückte Seitenwand (14), einen Boden (49) und ggf. eine hintere Schottwand (50) begrenzt ist.

19. Lastkraftwagen nach Anspruch 8, **dadurch gekennzeichnet, dass** das Traggestell (17) des Fahrerhaus-Heckmoduls (6)
- zwei zueinander parallele vordere Vertikalholme (38, 39) aufweist, die für entsprechende Einpassung in die frontmodulseitigen Tragkonsolen (22, 23) beabstandet und zur Bildung eines offenen Portales oben durch einen Querholm (54) miteinander verbunden sind, ferner
- zwei zueinander parallele und im Abstand der vorderen Vertikalholme (38, 39) angeordnete hintere Vertikalholme (55, 56) aufweist, die durch einen oberen Querholm (57) und mittleren Querholm (58) miteinander verbunden sind, zusammen mit diesen (55, 56) die Versteifung der Heckmodul-Rückwand (15) bilden und außerdem mit den vorderen Vertikalholmen (38, 39), unteren Längsholmen (36, 37) und oberen Längsholmen (40, 41 ) verbunden sind, wobei das jeweilige Holmfeld in sich durch fachwerkartig angeordnete Streben (59a) versteift ist, und außerdem
- neben diesem portalartigen Traggestell-Bereich einen mit diesem durch Querholme (60) verstrebten, die Seitenwand (13) versteifenden und aus mehreren zusammengesetzten Holmen (61 bis 65) bestehenden Traggestell-Bereich
besteht.

20. Lastkraftwagen nach Anspruch 19, **dadurch gekennzeichnet, dass** die unteren Längsholme (36, 37) des Heckmodul-Traggestells (17) sich am unteren Ende der vorderen Vertikalholme (38, 39) schräg nach hinten oben gerichtet anschließen und dabei mit ihren die Auflageorgane (28, 29) bildenden Unterseiten mit der Horizontalen einen spitzen Winkel einschließen, der jenem entspricht, den die Auflageflächen (34, 35) an den frontmodulseitigen Tragkonsolen (22, 23) mit der Horizontalen einschließen.

21. Lastkraftwagen nach Anspruch 8, **dadurch gekennzeichnet, dass** der Boden (11) des Fahrerhaus-Frontmoduls (5) zusammen mit den Längsträgern (18, 19) und den an diesen endseitig angebrachten Tragkonsolen (22, 23) und weiteren Anbauteilen (66, 67) eine eigenständige, komplett vorgefertigte und vormontierte Boden-Baugruppe bildet.

22. Lastkraftwagen nach Anspruch 8, **dadurch gekennzeichnet, dass** die Rückwand (10) des Fahrerhaus-Frontmoduls (5) zusammen mit den sie versteifenden Gerippe-Holmen ( ) sowie den an den Holmen (24, 25) angebrachten Befestigungskonsolen (26, 27), Anschlag- und Haltebügeln (81, 82, 83) und weiteren Anbauteilen (68) eine eigenständige, komplett vorgefertigte und vormontierte Baugruppe bildet.

23. Lastkraftwagen nach den Ansprüchen 21 und 22, **dadurch gekennzeichnet, dass** die Boden-Baugruppe und die Rückwand-Baugruppe nach ihrer eigenständigen Herstellung miteinander und mit den übrigen Wänden (7, 8, 9) sowie dem Dach (12) des Rohfahrerhaus-Frontmoduls (5) verbunden werden .

24. Lastkraftwagen nach Anspruch 1, **dadurch gekennzeichnet, dass** das Fahrer haus-Frontmodul (5) zusammen mit der Panzerung (88) und das Fahrerhaus-Heckmodul (6) jeweils durch eine eigenständige, vorzufertigende und vorzumontierende Baugruppe gebildet sind, die bei der Fahrhausendmontage an den hierfür vorbereiteten Stellen zusammenfügbar und dann über die dazugehörigen Schraubver bindungen lösbar miteinander verbindbar sind.

## Claims

1. Lorry, in particular lorry for military purposes, with a chassis and with a driver's cab (1) which is arranged tiltably on the frame (4) of said chassis and is protected at certain points by fitted armour plates (88), **characterized in that** the driver's cab (1) is composed of a front module (5) and a rear module (6), the front module (5) having a front wall (7), two sides walls (8, 9), a rear wall (10), a floor (11) and a roof (12) and forming a cab for the driver and passengers, whereas the rear module (6) has a load-bearing structure (17), which is at least partially lined by walls (13, 14, 16), and forms a hood-like protective and receiving space for the drive unit and for further vehicle parts and accessories, **in that** the rear module (6) is fastened detachably to the rear of the front module (5) and is carried by the latter, and **in that** the rear armour plating of the driver's cab (1) is realized by armour plates (88) fitted between the front module (5) and rear module (6) thereof.

2. Lorry according to Claim 1, **characterized in that** a plurality of armour plates (88) arranged next to one another is provided, the armour plates being fastened in front of the rear module (6) to the front-module rear wall (10) in a manner completely or at least substantially covering the latter.

3. Lorry according to Claim 2, **characterized in that** the armour plates (88) are fastened detachably to the front-module rear wall (10).

4. Lorry according to Claim 3, **characterized in that** the armour plates (88) each have a plurality of through bores which are arranged in corner regions or are moved over to the edge and through which fastening screws are guided, said fastening screws being screwed into threads arranged inside the structure of the front-module rear wall (10) and, in the tightened state, pressing the armour plates (88) against stop points provided on the front-module rear wall (10).

5. Lorry according to Claim 4, **characterized in that** the threads provided inside the front-module rear wall (10) for the fastening of the armour plates (88) are provided in threaded sleeves (89) which are welded into the structure of the front-module rear wall (10) and each have a bearing flange (89a) which forms a stop point for supporting an armour plate (88).

6. Lorry according to Claim 1, **characterized in that** the armour plates (88) are formed by steel or sandwich plates which are appropriately dimensioned in the thickness thereof, depending on the degree of bombardment security, and have a plurality of different material layers of steel, fibre- or fleece-reinforced plastics, ceramic or composite ceramic materials and the like, arranged one above another.

7. Lorry according to one of the preceding claims, **characterized in that** the armour plates (88) fastened to the front-module rear wall (10) are spaced apart from the rear module (6) by only a small amount when the latter is in the mounted position on the front module (5).

8. Lorry according to Claim 1, **characterized in that** the floor (11) of the driver's cab front module (5) is reinforced by two floor longitudinal members (18, 19) which are supplemented at the rear by load-bearing brackets (22, 23) projecting to the rear through the front-module rear wall (10) and, together with said load-bearing brackets, act as carriers for the driver's cab rear module (6), **in that** at the bottom of the load-bearing structure (17) of the rear module (6) there are supporting members (28, 29) with which the rear module (6), when mounted on the front module (5), comes to bear on the floor-member-side load-bearing brackets (22, 23) thereof, and **in that** in the region of the front-module rear wall (10) and in the front region of the rear-module load-bearing structure (17) there are supporting and connecting members (38, 39, 22a, 22b, 23a, 23b, 30, 31; 26, 27, 32, 33; 81, 82, 83) which are assigned in different height positions to one another and have mutually aligned bores or holes (77, 78, 26', 32', 27', 33', 81', 82', 83') through which screws (75, 79, 87) can be guided, which screws are used to hold and fasten the two driver's cab modules (5, 6) securely on each other and to each other in the longitudinal, transverse and vertical directions in the mounted position.

9. Lorry according to Claim 8, **characterized in that** the two front-module-side load-bearing brackets (22, 23) extend behind the front-module rear wall (10) in a plane parallel to the longitudinal vertical plane of the vehicle and each have a bearing surface (34, 35) extending obliquely upwards to the rear at the same acute angle to the horizontal, and **in that** the associated rear-module-side supporting members (28, 29) are each formed by a section which is arranged at the front on a lower strut (36, 37) of the rear-module load-bearing structure (17) and the lower edges of which are arranged at the same oblique angle to the horizontal as the associated bearing surfaces (34, 35) on the front-module load-bearing brackets (22, 23) such that the driver's cab rear module (6), when in the stop and connecting position with respect to the driver's cab front module (5), is supported in relation to the latter by means of oblique ramps.

10. Lorry according to Claim 8, **characterized in that** two fastening brackets (26, 27) are provided as further supporting and connecting members for a transversely and vertically secure fastening of the rear module (6) to the front module (5), each of which fastening brackets is arranged in the upper region of a vertical strut (24, 25) reinforcing the front-module rear wall (10), and which are assigned fastening members (32, 33), which are to be connected thereto via the screws (75), on the load-bearing structure (17) of the rear module (6).

11. Lorry according to Claim 10, **characterized in that** each of the front-module-side fastening brackets (26, 27) extends behind the front-module rear wall (10) in a plane parallel to the longitudinal vertical plane of the vehicle obliquely upwards to the rear at an acute angle to the horizontal and the fastening members (32, 33), which are assigned on the rear module side, are each formed by a holding plate which is fastened in the corner region between a vertical strut (38, 39) and an upper longitudinal strut (40, 41) of the rear-module load-bearing structure (17) and has at least one transverse through bore (32', 33'), with which, when the rear module (6) is in the mounted position on the front module (5), transverse through holes (26', 27') in the front-module-side fastening brackets (26, 27) are aligned, in order to receive screws (75) serving for the vertically and transversely secure upper fastening of the two driver's cab modules (5, 6).

12. Lorry according to either of Claims 8 and 9, **characterized in that** the front-module-side load-bearing brackets (22, 23) are formed by sheet-metal punched and bent parts which are fastened to the end regions of the two floor longitudinal members (18, 19) and have a U-shaped, upwardly open cross section over at least a large part of the bearing and connecting region for the lower supporting members (28, 29) and fastening members (30, 31) on the rear-module side, the floors (34, 35) in said cross-sectional regions substantially taking over the supporting and load-bearing function, and the side walls (22a, 22b, 23a, 23b) in said cross-sectional regions taking over the transverse and vertical securing function and fastening function for the attached rear module (6).

13. Lorry according to Claim 12, **characterized in that** lower fastening members (30, 31) on the rear-module side are formed by holding rails which are fastened so as to rest at the top on the struts (36, 37) of the rear-module load-bearing structure (17), the struts serving for supporting purposes and having the oblique bearing regions (28, 29), and each have a plurality of transverse through bores (77), with which, when the rear module (6) is in the mounted position of the front module (5), transverse through holes (78) in the side walls (22a, 22b, 23a, 23b) of the front-module-side load-bearing brackets (22, 23) are aligned, in order to receive screws (79) serving for the vertically and transversely secure lower fastening of the two driver's cab modules (5, 6).

14. Lorry according to either of Claims 10 and 11, **characterized in that** the two front-module-side fastening brackets (26, 27) are each formed by a sheet-metal punched and bent part which is U-shaped, as seen in top view, consisting in each case of two spaced-apart and parallel side cheeks (26a, 26b, 27a, 27b) which are connected to each other by a transverse web (26c, 27c) and are each fastened to the upper region of one of the two vertical struts (24, 25) reinforcing the front-module rear wall (10), in a manner fitting over said vertical struts at the front and laterally on the outside, the upper fastening members (32, 33) of the rear module (6), which fastening members are formed by holding plates, each being received in a manner fitted between the two side cheeks (26a, 26b, and 27a, 27b, respectively) of the respective front-module-side fastening brackets (26, 27) when said rear module is in the mounted position on the front module (5).

15. Lorry according to Claim 8, **characterized in that** as members for longitudinal support and fastening of the rear module (6) on/to the front module (5), in each case a plurality of stop and holding clips (81, 82, 83) are fastened, in particular welded, in different height positions on two vertical struts (24, 25) of the framework reinforcing the front-module rear wall (10), the outer plates of which clips each have at least one through hole (81', 82', 83') and a bearing surface, which projects to the rear by a certain extent over the front-module rear wall (10) and is arranged parallel to the plane thereof, for the rear module (6), which comes to bear against vertical framework struts (38, 39) when mounted on the front module (5), and in the interior of which clips a threaded plate (84, 85, 86) having at least one threaded bore (84', 85', 86') is in each case accommodated in a floating manner, and **in that** the vertical struts (38, 39) of the rear-module load-bearing structure (17) are provided with through bores (38a, 38b, 38c; 39a, 39b, 39c) which, when the rear module (6) is in the mounted position on the front module (5), are aligned with the through holes (81', 82', 83') in the stop and holding clips (81, 82, 83), and through which threaded screws (87) are guided, which screws are screwed with the threads thereof into the threaded bores (84', 85', 86') in the threaded plates (84, 85, 86) and, in the tightened state, press the latter frictionally against the inner surfaces of the stop and holding clip outer plates, as a result of which the rear module (6) is supported with the end sides of the struts (38, 39) thereof frictionally against the outer sides of the stop and holding clip outer plates.

16. Lorry according to Claim 1, **characterized in that** one of the two side walls (8, 9) of the driver's cab front module (5) is longer than the oppositely arranged side wall, and **in that** the rear connection of said two side walls (8, 9) of unequal length is produced by a rear wall (10) which is angled per se, as a result of which, in addition to a substantially flat rear-wall section (10a), a driver's cab bay (46) which projects rearwards over the latter is provided, said driver's cab bay being delimited laterally and at the rear by rear-wall sections (10b, 10c) and at the top by a corresponding widened portion (12a) of the roof (12).

17. Lorry according to Claim 16, **characterized in that** the driver's cab rear module (6) has, in the front region, a recess (47) on one side of such a size that the projecting driver's cab bay (46) on the front module (5) can enter therein when the front module is combined with the rear module (6), but the connection between the front module (5) and rear module (6) by means of the members (22, 23, 28, 29, 26, 27, 32, 33, 81, 82, 83, 84, 85, 86; 75, 79, 87) which are provided for this purpose takes place only in the driver's cab region not associated with the driver's cab bay (46) and the recess (47), i.e. only in the region of the rear-wall section (10a).

18. Lorry according to Claim 17, **characterized in that** the driver's cab rear module (6) has, on the side thereof opposite the recess (47), a receiving region (48) for a spare wheel and an associated lifting/lowering device, which receiving region is delimited on the inside by the side wall (14) which is moved inwards in relation to the side wall (8 or 9) on the same side of the front module (5), a floor (49) and optionally a rear partition wall (50).

19. Lorry according to Claim 8, **characterized in that** the load-bearing structure (17) of the driver's cab rear module (6)
- has two mutually parallel front vertical struts (38, 39) which are spaced apart for corresponding fitting into the front-module-side load-bearing brackets (22, 23) and are connected to each other at the top by a transverse strut (54) in order to form an open portal, furthermore
- has two mutually parallel rear vertical struts (55, 56) which are arranged at a distance from the front vertical struts (38, 39) and are connected to each other by an upper transverse strut (57) and central transverse strut (58), forming together with said vertical struts (55, 56) the reinforcement of the rear-module rear wall (15), and also are connected to the front vertical struts (38, 39), lower longitudinal struts (36, 37) and upper longitudinal struts (40, 41), the respective strut area being reinforced by angle braces (59a) arranged in the manner of a lattice, and, in addition,
- consists, in addition to said portal-like load-bearing structure region, of a load-bearing region which is braced to the latter by means of transverse struts (60), reinforces the side wall (13) and consists of a plurality of assembled struts (61 to 65).

20. Lorry according to Claim 19, **characterized in that** the lower longitudinal struts (36, 37) of the rear-module load-bearing structure (17) adjoin the lower end of the front vertical struts (38, 39) in a manner directed obliquely upwards to the rear and with the lower sides thereof, which sides form the bearing members (28, 29), enclose an acute angle with the horizontal, the angle corresponding to the angle which the bearing surfaces (34, 35) on the front-module-side load-bearing brackets (22, 23) enclose with the horizontal.

21. Lorry according to Claim 8, **characterized in that** the floor (11) of the driver's cab front module (5) together with the longitudinal members (18, 19) and the load-bearing brackets (22, 23), which are attached to the end sides of the latter, and with further add-on parts (66, 67) forms an independent, completely premanufactured and preassembled floor subassembly.

22. Lorry according to Claim 8, **characterized in that** the rear wall (10) of the driver's cab front module (5) together with the framework struts, which reinforce said rear wall, and with the fastening brackets (26, 27), which are attached to the struts (24, 25), and with the stop and holding clips (81, 82, 83) and further add-on parts (68) forms an independent, completely premanufactured and preassembled subassembly.

23. Lorry according to Claims 21 and 22, **characterized in that**, after being independently produced, the floor subassembly and the rear-wall subassembly are connected to each other and to the remaining walls (7, 8, 9) and to the roof (12) of the unfinished driver's cab front module (5).

24. Lorry according to Claim 1, **characterized in that** the driver's cab front module (5) together with the armour plating (88) and the driver's cab rear module (6) are each formed by an independent subassembly which is to be premanufactured and preassembled and, during the final assembly of the driver's cab, can be fitted together at the points provided for this purpose and can then be connected detachably to one another via the associated screw connections.

## Revendications

1. Camion, en particulier camion destiné à des utilisations militaires, avec un châssis et une cabine de conducteur (1) montée de façon basculante sur le cadre (4) de celui-ci, qui est protégée à des endroits déterminés par des plaques de blindage appliquées (88), **caractérisé en ce que** la cabine de conducteur (1) est composée d'un module antérieur (5) et d'un module postérieur (6), dans lequel le module antérieur (5) présente une paroi avant (7), deux parois latérales (8, 9), une paroi arrière (10), un fond (11) et un toit (12) et forme une cabine pour un conducteur et un passager, tandis que le module postérieur (6) présente au contraire un châssis porteur (17) revêtu au moins partiellement par des parois (13, 14, 16) et forme un espace de logement et de protection en forme de capot pour le groupe de propulsion et d'autres parties et accessoires du véhicule, **en ce que** le module postérieur (6) est fixé à l'arrière du module antérieur (5) et est porté par celui-ci, et **en ce que** le blindage arrière de la cabine de conducteur (1) est réalisé au moyen de plaques de blindage (88) insérées entre son module antérieur (5) et son module postérieur (6).

2. Camion selon la revendication 1, **caractérisé en ce qu'**il est prévu plusieurs plaques de blindage (88) disposées les unes à côté des autres, qui sont fixées devant le module postérieur (6), à la paroi arrière (10) du module antérieur en recouvrant celle-ci entièrement ou au moins largement.

3. Camion selon la revendication 2, **caractérisé en ce que** les plaques de blindage (88) sont fixées de façon démontable à la paroi arrière (10) du module antérieur.

4. Camion selon la revendication 3, **caractérisé en ce que** les plaques de blindage (88) présentent chaque fois des trous de passage disposés dans des zones d'angle ou déplacés vers le bord, à travers lesquels sont menées des vis de fixation, qui sont vissées dans des filets disposés à l'intérieur de la structure de la paroi arrière (10) du module antérieur et qui, à l'état serré, pressent les plaques de blindage (88) contre des endroits de butée prévus sur la paroi arrière (10) du module antérieur.

5. Camion selon la revendication 4, **caractérisé en ce que** les filets prévus à l'intérieur de la paroi arrière (10) du module antérieur pour la fixation des plaques de blindage (88) sont prévus dans des douilles filetées (89), qui sont soudées dans la structure de la paroi arrière (10) du module antérieur et présentent respectivement une bride d'appui (89a), qui forme un endroit de butée pour l'appui d'une plaque de blindage (88).

6. Camion selon la revendication 1, **caractérisé en ce que** les plaques de blindage (88) sont formées, selon leur degré de sécurité contre des projectiles, par des plaques d'acier ou des plaques sandwich d'épaisseur adaptée de façon correspondante, avec plusieurs couches différentes superposées soit métalliques en acier, soit en matières plastiques renforcées par des fibres ou un tissu, soit par des céramiques ou des matériaux composites céramiques.

7. Camion selon l'une quelconque des revendications précédentes, **caractérisé en ce que** les plaques de blindage (88) fixées à la paroi arrière (10) du module antérieur ne sont espacées que d'une faible distance du module postérieur (6) lorsque celui-ci se trouve en position montée sur le module antérieur (5).

8. Camion selon la revendication 1, **caractérisé en ce que** le fond (11) du module antérieur (5) de la cabine de conducteur est renforcé par deux longerons de fond (18, 19), qui sont complétés à l'arrière par des consoles de support (22, 23) dépassant vers l'arrière au-delà de la paroi arrière (10) du module antérieur et font office avec ces dernières de support pour le module postérieur (6) de la cabine de conducteur, **en ce qu'**il est prévu dans le bas sur le châssis porteur (17) du module postérieur (6) des organes d'appui (28, 29), avec lesquels le module postérieur (6) vient s'appliquer lors de son montage sur le module antérieur (5) sur les consoles de support (22, 23) du côté du support de fond de celui-ci, et **en ce qu'**il est prévu, dans la région de la paroi arrière (10) du module antérieur ainsi que dans la région avant du châssis porteur (17) du module postérieur, à différentes positions en hauteur, des organes d'appui et de liaison associés les uns aux autres (38, 39, 22a, 22b, 23a, 23b, 30, 31; 26, 27, 32, 33; 81, 82, 83) avec des alésages ou des trous (77, 78, 26', 32', 27', 33', 81', 82', 83') alignés les uns par rapport aux autres, à travers lesquels peuvent être menées des vis (75, 79, 87) au moyen desquelles les deux modules (5, 6) de la cabine de conducteur sont, en position assemblée, en toute sécurité maintenus l'un contre l'autre et fixés l'un à l'autre en direction longitudinale, transversale et verticale.

9. Camion selon la revendication 8, **caractérisé en ce que** les deux consoles de support côté module antérieur (22, 23) s'étendent derrière la paroi arrière (10) du module antérieur dans un plan parallèle au plan vertical longitudinal du véhicule et présentent respectivement une face d'appui (34, 35) s'étendant en oblique vers le haut et vers l'arrière sous le même angle aigu par rapport à l'horizontale, et **en ce que** les organes d'appui correspondants côté module postérieur (28, 29) sont formés respectivement par une partie disposée à l'avant sur un longeron inférieur (36, 37) du châssis porteur (17) du module postérieur, dont les côtés inférieurs sont disposés sous le même angle aigu par rapport à l'horizontale que les faces d'appui correspondantes (34, 35) sur les consoles de support côté module antérieur (22, 23), de telle manière que le module postérieur (6) de la cabine de conducteur, lorsqu'il se trouve en position de butée et de liaison par rapport au module antérieur (5) de la cabine de conducteur, soit supporté par rapport à ce dernier au moyen de rampes obliques.

10. Camion selon la revendication 8, **caractérisé en ce qu'**il est prévu, comme autres organes d'appui et de liaison pour une fixation sécurisée en direction transversale et verticale du module postérieur (6) sur le module antérieur (5), deux consoles de fixation (26, 27) dont chacune est disposée dans la région supérieure d'un longeron vertical (24, 25) renforçant la paroi arrière (10) du module antérieur, et auxquelles sont associés sur le châssis porteur (17) du module postérieur (6) des organes de fixation (32, 33) à assembler à celles-ci au moyen des vis (75).

11. Camion selon la revendication 10, **caractérisé en ce que** chacune des consoles de fixation côté module antérieur (26, 27) s'étend derrière la paroi arrière (10) du module antérieur, en oblique vers l'arrière et vers le haut sous un angle aigu par rapport à l'horizontale, dans un plan parallèle au plan vertical longitudinal du véhicule, et les organes de fixation associés côté module postérieur (32, 33) sont formés respectivement par une plaque de maintien fixée entre un longeron vertical (38, 39) et un longeron longitudinal supérieur (40, 41) du châssis porteur (17) du module postérieur, laquelle présente au moins un alésage de passage transversal (32', 33') avec lequel, lorsque le module postérieur (6) se trouve en position montée sur le module antérieur (5), des trous de passage transversaux (26', 27') dans les consoles de fixation côté module antérieur (26, 27) sont alignés afin de contenir des vis (75) servant à la fixation supérieure, sécurisée en direction verticale et transversale, des deux modules (5, 6) de la cabine de conducteur.

12. Camion selon l'une quelconque des revendications 8 et 9, **caractérisé en ce que** les consoles de support côté module antérieur (22, 23) sont formées par des pièces de tôle découpées et pliées, qui sont fixées sur les régions d'extrémité des deux longerons de fond (18, 19) et présentent au moins sur une grande partie de la face d'appui et de liaison pour les organes d'appui (28, 29) et les organes de fixation (30, 31) inférieurs côté module postérieur une section transversale en forme de U ouverte vers le haut, dans lequel les fonds (34, 35) assument dans ces régions de la section transversale essentiellement la fonction d'appui et de support et les parois latérales (22a, 22b, 23a, 23b) assument dans ces régions de la section transversale la fonction de sécurisation transversale et verticale ainsi que la fonction de fixation pour le module postérieur appliqué (6).

13. Camion selon la revendication 12, **caractérisé en ce que** des organes de fixation inférieurs côté module postérieur (30, 31) sont fixés par des rails de maintien, qui sont fixés en appui sur les longerons (36, 37) du châssis porteur (17) du module postérieur servant d'appui et présentant les régions de support obliques (28, 29), et qui présentent chaque fois plusieurs alésages de passage transversaux (77), avec lesquels, lorsque le module postérieur (6) se trouve en position de montage sur le module antérieur (5), des trous de passage transversaux (78) dans les parois latérales (22a, 22b, 23a, 23b) des consoles de support côté module antérieur (22, 23) sont alignés, afin de contenir des vis (79) servant à la fixation inférieure, sécurisée en direction verticale et transversale, des deux modules (5, 6) de la cabine de conducteur.

14. Camion selon l'une quelconque des revendications 10 et 11, **caractérisé en ce que** les deux consoles de fixation côté module antérieur (26, 27) sont formées respectivement par une pièce de tôle découpée et pliée en forme de U dans une vue en plan, se composant chaque fois de deux joues latérales (26a, 26b, 27a, 27b) parallèles et espacées l'une de l'autre, qui sont reliées l'une à l'autre par une nervure transversale (26c, 27c) et qui sont respectivement fixées à la région supérieure d'un des deux longerons verticaux (24, 25) renforçant la paroi arrière (10) du module antérieur, en recouvrant ceux-ci vers l'avant et latéralement vers l'extérieur, dans lequel, lorsque le module postérieur (6) se trouve en position montée sur le module antérieur (5), les organes de fixation supérieurs (32, 33) de celui-ci, formés par des plaques de maintien, sont respectivement logés par emboîtement entre les deux joues latérales (26a, 26b ou 27a, 27b) des consoles de fixation respectives côté module antérieur (26, 27).

15. Camion selon la revendication 8, **caractérisé en ce que**, pour un appui et une fixation en direction longitudinale du module postérieur (6) sur le module antérieur (5), plusieurs étriers de butée et de maintien (81, 82, 83) sont fixés, en particulier sont soudés, à différentes positions en hauteur sur deux longerons verticaux (24, 25) de la membrure renforçant la paroi arrière (10) du module antérieur, dont les plaques extérieures présentent chaque fois au moins un trou de passage (81', 82', 83') ainsi qu'une face d'appui dépassant dans une certaine mesure derrière la paroi arrière (10) du module antérieur et disposée parallèlement au plan de celle-ci pour le module postérieur (6) venant s'appuyer par des longerons de membrure verticaux (38, 39) sur le module antérieur (5) lors du montage, et à l'intérieur desquels une plaque filetée (84, 85, 86) présentant au moins un alésage fileté (84', 85', 86') est chaque fois logée de façon flottante, et **en ce qu'**il est prévu dans les longerons verticaux (38, 39) du châssis porteur (17) du module postérieur des alésages de passage (38a, 38b, 38c; 39a, 39b, 39c) qui, lorsque le module postérieur (6) se trouve en position montée sur le module antérieur (5), sont alignés avec des alésages de passage (81', 82', 83') dans les étriers de butée et de maintien (81, 82, 83) et à travers lesquels sont menées des vis (87) qui sont vissées avec leurs filets dans les alésages filetés (84', 85', 86') des plaques filetées (84, 85, 86) et pressent celles-ci, à l'état serré, par complémentarité de force contre les faces intérieures des plaques extérieures des étriers de butée et de maintien, le module postérieur (6) étant ainsi appuyé avec les faces frontales de ses longerons (38, 39) par complémentarité de force sur les faces extérieures des plaques extérieures des étriers de butée et de maintien.

16. Camion selon la revendication 1, **caractérisé en ce qu'**une des deux parois latérales (8, 9) du module antérieur (5) de la cabine de conducteur est plus longue que la paroi latérale opposée et **en ce que** la liaison arrière de ces deux parois latérales d'inégale longueur (8, 9) est réalisée au moyen d'une paroi arrière par nature coudée (10), procurant ainsi, à côté d'une partie de paroi arrière largement plane (10a), un oriel (46) de la cabine de conducteur en saillie vers l'arrière, qui est limité latéralement et vers l'arrière par des parties de paroi arrière (10b, 10c) et vers le haut par une extension correspondante (12a) du toit (12).

17. Camion selon la revendication 16, **caractérisé en ce que** le module postérieur (6) de la cabine de conducteur présente dans la région avant une découpe unilatérale (47) de grandeur telle que l'oriel saillant (46) de la cabine de conducteur sur le module antérieur (5) puisse s'y insérer lors de sa jonction avec le module postérieur (6), l'assemblage entre le module antérieur (5) et le module postérieur (6) au moyen des organes prévus à cet effet (22, 23, 28, 29, 26, 27, 32, 33, 81, 82, 83, 84, 85, 86; 75, 79, 87) n'étant cependant effectué que dans la région de la cabine de conducteur ne correspondant pas à l'oriel (46) de la cabine de conducteur ou à la découpe (47), donc uniquement dans la région de la partie de paroi arrière (10a).

18. Camion selon la revendication 17, **caractérisé en ce que** le module postérieur (6) de la cabine de conducteur présente, sur son côté opposé à la découpe (47), une région de logement (48) pour une roue de réserve et un dispositif de levage/descente correspondant, qui est limité intérieurement par la paroi latérale (14) déplacée vers l'intérieur par rapport à la paroi latérale du même côté (8 ou 9) du module antérieur (5), un fond (49) et éventuellement une paroi de séparation arrière (50).

19. Camion selon la revendication 8, **caractérisé en ce que** le châssis porteur (17) du module postérieur (6) de la cabine de conducteur
- présente deux longerons verticaux avant (38, 39), parallèles l'un à l'autre, qui sont espacés en vue d'un emboîtement correspondant dans les consoles de support côté module antérieur (22, 23) et qui sont reliés l'un à l'autre par un longeron transversal (54) en vue de la formation d'un portique ouvert vers le haut, en outre
- présente deux longerons verticaux arrière (55, 56) disposés parallèlement l'un à l'autre et à distance des longerons verticaux avant (38, 39), qui sont reliés l'un à l'autre par un longeron transversal supérieur (57) et un longeron transversal moyen (58), qui forment avec ceux-ci (55, 56) le renfort de la paroi arrière (15) du module postérieur, et qui sont par ailleurs reliés aux longerons verticaux avant (38, 39), aux longerons longitudinaux inférieurs (36, 37) et aux longerons longitudinaux supérieurs (40, 41), dans lequel le champ de longeron respectif est en soi renforcé par des entretoises (59a) disposées en forme de treillis, et se compose par ailleurs
- en plus de cette région du châssis porteur en forme de portique, d'une région du châssis porteur reliée à celle-ci par des longerons transversaux (60), renforçant la paroi latérale (13) et composée de plusieurs longerons assemblés (61 à 65).

20. Camion selon la revendication 19, **caractérisé en ce que** les longerons longitudinaux inférieurs (36, 37) du châssis porteur (17) du module postérieur se raccordent en direction oblique vers l'arrière et vers le haut à l'extrémité inférieure des longerons verticaux avant (38, 39) et forment ainsi, avec leurs faces inférieures formant les organes d'appui (28, 29), un angle aigu par rapport à l'horizontale, qui correspond à celui que les faces d'appui (34, 35) sur les consoles de support côté module antérieur (22, 23) forment avec l'horizontale.

21. Camion selon la revendication 8, **caractérisé en ce que** le fond (11 ) du module antérieur (5) de la cabine de conducteur forme, avec les longerons (18, 19) et les consoles de support (22, 23) placées du côté de l'extrémité sur ceux-ci ainsi que d'autres éléments de montage (66, 67), un module de fond autonome, complètement préfabriqué et pré-assemblé.

22. Camion selon la revendication 8, **caractérisé en ce que** la paroi arrière (10) du module antérieur (5) de la cabine de conducteur forme, avec les longerons de membrure qui la renforcent ainsi qu'avec les consoles de support (26, 27) placées sur les longerons (24, 25), des étriers de butée et de maintien (81, 82, 83) et avec d'autres éléments de montage (68) un module autonome, complètement préfabriqué et pré-assemblé.

23. Camion selon les revendications 21 et 22, **caractérisé en ce que** le module de fond et le module de paroi arrière sont, après leur fabrication autonome, assemblés l'un à l'autre et assemblés aux autres parois (7, 8, 9) ainsi qu'au toit (12) du module antérieur (5) de la cabine de conducteur.

24. Camion selon la revendication 1, **caractérisé en ce que** le module antérieur (5) de la cabine de conducteur avec le blindage (88) et le module postérieur (6) de la cabine de conducteur sont respectivement formés par un module autonome à pré-fabriquer et à pré-assembler qui, lors du montage final de la cabine de conducteur, peuvent être joints aux endroits prévus à cet effet et assemblés l'un à l'autre de façon démontable par les assemblages vissés correspondants.
